# FASCICULE DE BREVET EUROPEEN

(11) **EP 3 161 209 B1**
(45) Date de publication et mention de la délivrance du brevet: **18.04.2018**
(21) Numéro de dépôt: 15733429.3
(22) Date de dépôt: 29.06.2015
(51) Int. Cl.: D21H 17/21, C12P 19/00, C09D 199/00, C09J 199/00, D21H 17/22, D21H 17/24, D21H 19/50, C08L 99/00, C08H 99/00

(54) **UTILISATION DE FARINE DE BLÉ DANS LE PROCÉDÉ PAPETIER**
VERWENDUNG VON WEIZENMEHL IN DER PAPIERHERSTELLUNG
USE OF WHEAT FLOUR IN THE PAPERMAKING PROCESS

(30) Priorité: 30.06.2014 FR 1456125
(43) Date de publication de la demande: 03.05.2017
(73) Titulaire: Moulins Soufflet, 10400 Nogent-sur-Seine (FR); Emin Leydier, 01100 Oyonnax (FR)
(72) Inventeur: CELHAY, Frédéric, 92250 La Garenne-Colombes (FR); DURY, Benoit, 77320 Beton-Bazoches (FR); ANDRES, Serge, 26600 Larnage (FR)
(74) Mandataire: Lavoix
(86) Numéro de dépôt international: PCT/EP2015/064718
(87) Numéro de publication internationale: WO 2016/001153

(56) Documents cités:
- EP-A1- 2 096 124
- WO-A1-2008/069655

## Description

La présente invention concerne l'utilisation de farines de céréales comme substitut de l'amidon dans les procédés de fabrication de papier ou de carton, en particulier dans les procédés d'enduction de papier ou de carton.

En papeterie, l'amidon est conventionnellement utilisé comme liant ou agent de renforcement du papier dans des "sauces" lors de l'enduction du matelas fibreux formé par les fibres de cellulose.

On appelle "sauce" la composition appliquée en surface d'un papier par des techniques d'enduction ou de couchage. L'amidon joue un rôle filmogène et permet de lier les constituants de la sauce et/ou d'augmenter les caractéristiques mécaniques du papier en créant des liaisons avec les fibres de cellulose.

L'amidon est issu de tubercules (pomme de terre, manioc) ou de céréales (blé, maïs). Il peut être natif ou modifié par des procédés physiques ou chimiques (pré-oxydation, cationisation, estérification partielle, etc...) de la fécule (de pomme de terre, de maïs, de blé), pour lui conférer des propriétés spécifiques.

Pour pouvoir être utilisé, l'amidon doit être partiellement hydrolysé lors d'une étape de cuisson par exemple en présence d'amylases pour abaisser sa viscosité.

La cuisson consiste à solubiliser les grains d'amidon en macromolécules avant d'hydrolyser partiellement ces dernières, pour permettre l'emploi de l'amidon en enduction ou couchage. Dans le cadre d'une hydrolyse enzymatique, le processus est interrompu dès lors que la viscosité cible est atteinte, par l'inhibition chimique et/ou thermique des enzymes.

L'hydrolyse partielle vise à produire des chaînes carbonées de longueur adéquate pour l'enduction. En effet, les chaines d'amidon doivent être suffisamment courtes pour pénétrer au coeur du papier mais suffisamment longues pour lui conférer la résistance mécanique attendue.

Le pilotage industriel de la qualité de la sauce d'enduction se fait par le critère de viscosité qui est une mesure indirecte de la longueur des chaines. La viscosité est classiquement réglée par l'ajout d'une quantité connue d'alpha-amylase dans la suspension d'amidon, en début de cuisson, puis par une inactivation chimique des amylases par ajout de sulfate de zinc au bout d'un temps déterminé pour arrêter l'action de l'enzyme, ou par une inactivation thermique par un chauffage à 125°C par exemple en jet cooker.

Toutefois, l'amidon natif est, dans le processus de fabrication des papiers, un produit élaboré relativement onéreux, qui de surcroit entre en compétition avec de nombreuses applications alimentaires. Il existe donc en industrie papetière un besoin permanent de moyens de substitution meilleur marché de cet amidon natif mais permettant d'obtenir un papier présentant les mêmes qualités qu'un papier classiquement enduit ou couché avec de l'amidon, et pouvant être utilisés à l'échelle industrielle dans des procédés d'enduction et/ou de couchage, avec des procédés de cuisson d'amidon tant continus que discontinus.

Il a été proposé de remplacer, dans le process papetier, l'amidon natif par de la farine. Néanmoins, l'utilisation de farine en régime permanent est systématiquement associée à deux problèmes majeurs qui nuisent à son utilisation dans les procédés d'enduction :
- les protéines présentes dans la farine forment des agglomérats dans la sauce, ce qui peut entraîner une formation de dépôts collants pouvant conduire à des incidents de production ou des imperfections de qualité du papier enduit, et
- les fibres solubles présentes dans la farine, notamment les pentosanes, contribuent à augmenter la viscosité de la sauce, dégradant ainsi sa qualité au point de la rendre impropre à l'utilisation en processus d'enduction ou de couchage en continu.

Différentes solutions ont été proposées dans l'état de la technique pour éviter ces problèmes. Il a ainsi été proposé dans la demande internationale WO 2008/069655 de formuler les farines avec des protéases et des enzymes de dégradation de polysaccharides non-amidon, voire un réducteur. Toutefois dans cette demande, l'utilisation spécifique de farine de seigle semble nécessaire car elle contient plus de protéines solubles dans l'eau et moins de protéines solubles dans l'alcool que la farine de blé. Des xylanases y sont utilisées pour éviter une accumulation des protéines lors de l'enduction de papier. Les résultats obtenus montrent que malgré 1 000 ppm de protéase et 500 ppm de xylanase dans la farine, un enrichissement de 10% de la concentration en protéines est mesuré avec une farine de blé au bout de 15 min sur une laize de 100 mm à une vitesse de 15 m/min.

De manière similaire, la demande européenne EP 2 096 124 propose d'ajouter des protéases et des enzymes dégradant les pentosanes et également d'utiliser des filtres de 250 µm sur un essai industriel afin d'éviter un enrichissement en matières sèches. Toutefois, une solution consistant à traiter la farine uniquement avec des protéases n'est pas envisageable sur le plan industriel, car les quantités d'enzymes à ajouter pour avoir un temps de traitement suffisamment court pour être applicable en industrie, seraient déraisonnables sur le plan économique. De plus, les essais réalisés à partir de farine dans les conditions telles que décrites dans la littérature montrent que la viscosité des sauces est instable même après le blocage de la réaction d'hydrolyse de l'amidon (ie : inactivation des amylases).

Les solutions proposées sont donc incomplètes pour éviter un enrichissement des protéines dans les circuits d'une size press industrielle et donc une augmentation de la viscosité de la sauce d'enduction.

Les présents inventeurs ont montré de manière inattendue que les problèmes de formation d'agglomérats et de stabilité de viscosité associés à l'utilisation de farines pouvaient être surmontés :
- en ajoutant, outre des protéases, des hémicellulases et de la cystéine, du chlorure de sodium lors de la fabrication de la sauce, de préférence dans la farine, et
- dans le cas de procédés d'enduction en continu, en ajoutant des hémicellulases à différents stades après la cuisson de la sauce (par exemple dans le bac de stockage ou le bac final du processus d'enduction ou de couchage).

Sans être lié par la théorie, cet effet inattendu pourrait être dû au fait que le sel protège l'amidon d'une réaction d'hydrolyse spontanée à haute température (qui entraîne une variation de la viscosité de la sauce) en ce sens qu'il influe positivement sur certaines réactions acido-basiques ou de condensation, sur l'activité de l'eau Aw ou sur la force ionique de la sauce.

Cette solution est d'autant plus avantageuse que le chlorure de sodium est particulièrement bon marché et que son ajout à la farine peut être réalisé très facilement. De plus, la quantité de sel minimale pour obtenir un effet acceptable sur le plan industriel est compatible avec l'ajout d'ingrédients additionnels dans la sauce, ce qui permet donc d'obtenir tout type de sauce d'enduction ou de couchage.

Par ailleurs, l'ajout de très faibles doses de xylanases après cuisson est suffisant pour résoudre le problème d'augmentation de la viscosité de la sauce suite à son recyclage. Cet ajout est de plus avantageux économiquement puisqu'il peut permettre en outre de diminuer la quantité de xylanases ajoutées à la farine de départ.

La présente invention concerne ainsi une composition, de préférence pour l'enduction ou le couchage d'un matériau ligno-cellulosique papier - carton, comprenant de la farine de céréales, 100 à 1000 ppm de cystéine, 50 à 1000 ppm à 20 000 PNU/g d'au moins une protéase, 10 à 1500 ppm à 1250 AXC/g d'au moins une hémicellulase et au moins 0,1% d'un sel qui n'est pas un inhibiteur enzymatique, en poids par rapport au poids de farine.

Elle concerne également un procédé de fabrication de sauce comprenant les étapes consistant à :
a) disperser ou solubiliser la composition ci-dessus dans de l'eau,
b) ajouter de 100 à 1500 mL par tonne de farine d'au moins une amylase à 165 LAU/mL, dans la composition dispersée ou solubilisée à l'étape a),
c) porter et maintenir le mélange obtenu à l'étape b) à une température supérieure ou égale à 75°C de manière à obtenir une sauce, et
d) inactiver les amylases présentes dans la sauce obtenue à l'étape c).

Elle a également pour objet un procédé de fabrication de sauce comprenant les étapes consistant à :
a) disperser ou solubiliser dans de l'eau une composition comprenant de la farine de céréales, 100 à 1000 ppm de cystéine, 50 à 1000 ppm à 20 000 PNU/g d'au moins une protéase et 10 à 1500 ppm à 1250 AXC/g d'au moins une hémicellulase, en poids par rapport au poids de farine,
b) ajouter, dans la composition dispersée ou solubilisée à l'étape a), au moins 0,1% d'un sel qui n'est pas un inhibiteur enzymatique, en poids par rapport au poids de farine, et de 100 à 1500 mL par tonne de farine d'au moins une amylase à 165 LAU/mL,
c) porter et maintenir le mélange obtenu à l'étape b) à une température supérieure ou égale à 75°C de manière à obtenir une sauce, et
d) inactiver les amylases présentes dans la sauce obtenue à l'étape c).

Elle a également pour objet une sauce susceptible d'être obtenue par les procédés de fabrication de sauce ci-dessus.

Un autre objet de la présente invention concerne un procédé d'enduction ou de couchage d'un matériau ligno-cellulosique papier - carton comprenant les étapes consistant à :
a) fabriquer une sauce par le procédé de fabrication de sauce ci-dessus,
b) enduire ou coucher un matériau ligno-cellulosique papier - carton avec la sauce obtenue à l'étape a), et
c) éventuellement récupérer, dans un bac de retour, le surplus de sauce, éventuellement filtré, après enduction ou couchage du matériau ligno-cellulosique papier - carton à l'étape b).

La présente invention a également trait à un procédé de fabrication d'un matériau ligno-cellulosique papier - carton enduit ou couché comprenant une étape d'enduction ou de couchage d'une matrice fibreuse ligno-cellulosique avec la sauce ci-dessus.

Elle concerne également un papier - carton enduit ou couché susceptible d'être obtenu par le procédé d'enduction ou de couchage ci-dessus ou par le procédé de fabrication d'un matériau ligno-cellulosique papier - carton enduit ou couché ci-dessus.

Elle a aussi pour objet l'utilisation de la composition ci-dessus pour enduire ou coucher un matériau ligno-cellulosique papier - carton.

### Description détaillée de l'invention

### Farine de céréales

Par "farine de céréales", on entend ici la poudre provenant de la mouture de grains de céréales.

La farine de céréales utilisée dans le cadre de l'invention peut être de la farine d'alpiste, d'avoine, de blé, d'engrain, d'épeautre, de froment, de blé poulard, d'amidonnier, de blé dur, de blé de Khorasan, de maïs, de millet, de millet commun, de millet des oiseaux, de millet japonais, de millet perle, de coix, d'éleusine, de fonio, de sorgho, de teff, d'orge, d'orge perlée, de riz, de riz sauvage, de seigle et de triticale. La farine de céréales utilisée dans le cadre de l'invention peut en particulier être de la farine d'un seul type de céréales ou de la farine d'un mélange de céréales.

De préférence, la farine de céréales utilisée dans le cadre de l'invention est sélectionnée dans le groupe constitué des farines de blé et de maïs et des mélanges de celles-ci. De manière davantage préférée, la farine de céréales utilisée dans le cadre de l'invention est de la farine de blé.

La farine de céréales utilisée dans le cadre de l'invention peut être obtenue par toute technique bien connue de l'homme du métier.

La farine de céréales utilisée dans le cadre de l'invention peut être de tout type.

Par "type de farine", on entend ici une variété de farine caractérisée en fonction de son taux de cendres. Comme il est bien connu de l'homme du métier, les farines sont classées selon leur taux de cendres, qui correspond à leur teneur en matières minérales ou teneur en son, exprimée en pourcentage, après cuisson à 900°C, par rapport à la masse de départ. Plus le taux de cendres est important, plus le numéro caractéristique du type de farine est élevé. Les techniques de détermination du taux de cendres sont bien connues de l'homme du métier et sont par exemple décrites dans la norme NF V03-720/IS 2171.

Les farines peuvent également être classées selon leur taux d'extraction, c'est-à-dire le rapport entre la masse de farine extraite et la masse de céréales utilisée, exprimée sous forme de pourcentage.

La correspondance entre le type de farine et le taux de cendres ou le taux d'extraction est bien connue de l'homme du métier et est typiquement décrite ci-dessous.

| **Type** | **Taux de cendres** | **Taux d'extraction** |
|---|---|---|
| T45 | < 0,50 | 70% |
| T55 | 0,50 - 0,60 | 75% |
| T65 | 0,62 - 0,75 | 80% |
| T80 | 0,75 - 0,90 | 82% |
| T110 | 1 - 1,20 | 85% |
| T150 | > 1,4 | 90% |

De préférence, la farine de céréales utilisée dans le cadre de l'invention est d'un type inférieur ou égal au type T55.

De préférence, la farine de céréales utilisée dans le cadre de l'invention est standardisée, en particulier au niveau de son activité amylolytique intrinsèque ou de son taux de cendres.

Les techniques de standardisation de l'activité amylolytique intrinsèque d'une farine sont bien connues de l'homme du métier et comprennent par exemple la standardisation de la farine selon son indice de chute d'Hagberg.

Comme il est bien connu de l'homme du métier, l'indice de chute d'Hagberg est basé sur la propriété d'empesage de l'amidon : si l'amidon est dégradé par une amylase, l'empois est affaibli et la solution devient moins visqueuse. Typiquement, la mesure de l'indice de chute d'Hagberg peut être mise en oeuvre en mélangeant la farine d'intérêt dans de l'eau, puis en chauffant la solution obtenue, de préférence au bain-marie, et en mesurant le temps de chute d'une sonde, exprimé en secondes. Typiquement, la mesure de l'indice de chute d'Hagberg est mise en oeuvre conformément à la norme NF EN ISO 3093.

De préférence, la farine de céréales utilisée dans le cadre de l'invention est standardisée de manière à présenter un indice de chute d'Hagberg supérieur ou égal à 300 s, de préférence de 300 à 400 s, de préférence de 310 à 375 s, de préférence, de 325 à 350 s.

De préférence, la farine de céréales utilisée dans le cadre de l'invention comprend une teneur en protéines comprise entre 5 et 20%, de manière davantage préférée entre 6 et 15%, de manière préférée entre toutes entre 7 et 12 %, et/ou une teneur en amidon comprise supérieure ou égale à 60%, de préférence entre 60 et 90%, de manière davantage préférée entre 65 et 75%, de manière préférée entre toutes entre 68 % et 72%.

### Cystéine

Par "cystéine", on entend ici l'acide aminé de formule 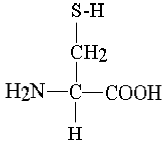 ainsi que ses sels. Dans le cadre de l'invention, le terme "cystéine" englobe ainsi la L-cystéine, la D-cystéine, la DL-cystéine, l'hydrochlorure de L-cystéine anhydre ou monohydrate, l'hydrochlorure de D-cystéine anhydre ou monohydrate, l'hydrochlorure de DL-cystéine anhydre ou monohydrate et les bases libres de L-, D- et DL-cystéine.

De préférence, la cystéine utilisée dans le cadre de l'invention est de la L-cystéine, en particulier de l'hydrochlorure de L-cystéine anhydre ou monohydrate. De manière préférée entre toutes, la cystéine utilisée dans le cadre de l'invention est de l'hydrochlorure de cystéine anhydre.

La cystéine utilisée dans le cadre de l'invention peut provenir de toute source. Elle peut être naturelle ou synthétique.

De préférence, la composition selon l'invention comprend 100 à 1000 ppm de cystéine, plus préférablement de 200 à 800 ppm, de 300 à 700 ppm, de 400 à 600 ppm. De manière préférée entre toutes, la composition selon l'invention comprend 500 ppm de cystéine.

### Sel

Dans le contexte de l'invention, on entend par "sel qui n'est pas un inhibiteur enzymatique" un sel qui n'inactive pas les activités enzymatiques, en particulier les activités protéasiques, hémicellulasiques, xylanasiques et/ou amylasiques. De préférence, le sel qui n'est pas un inhibiteur enzymatique utilisé dans le contexte de l'invention est un sel qui n'inhibe pas les activités protéasiques, xylanasiques et amylasiques.

Les techniques pour identifier un sel inhibiteur enzymatique sont bien connues de l'homme du métier et incluent par exemple la comparaison du niveau d'activité enzymatique d'une solution en présence et en absence du sel candidat. Des exemples de sels inhibiteurs enzymatiques sont également bien connus de l'homme du métier et incluent typiquement le sulfate de zinc, le sulfate de cuivre, les sels de phosphate tels que le sodium héxamétaphosphate, le sodium acide pyrophosphate, le tétrasodium pyrophosphate, le sodium aluminium phosphate, le monocalcium phosphate, le sodium tripolyphosphate, l'EDTA ou le disodium orthophosphate.

Dans un mode de réalisation préféré de l'invention, le sel qui n'est pas un inhibiteur enzymatique n'est pas le sulfate de zinc.

De préférence, le sel qui n'est pas un inhibiteur enzymatique utilisé dans le cadre de l'invention est sélectionné dans le groupe constitué du chlorure de sodium, du chlorure de potassium, du carbonate de calcium, du chlorure de fer(II), du chlorure d'argent, du chlorure de cuivre, et leurs mélanges.

De manière particulièrement préférée, le sel qui n'est pas un inhibiteur enzymatique utilisé dans le cadre de l'invention est du chlorure de sodium.

De préférence, la composition selon l'invention comprend au moins 0,1% de sel qui n'est pas un inhibiteur enzymatique, en particulier de chlorure de sodium, en poids par rapport au poids de farine. De manière encore préférée, la composition selon l'invention comprend de 0,1 à 2% de sel qui n'est pas un inhibiteur enzymatique, en particulier de chlorure de sodium, en poids par rapport au poids de farine, de préférence de 0,15 à 1,5%, de préférence de 0,20 à 1%, de manière encore préférée de 0,25 à 0,75%, de manière particulièrement préférée 0,5% de sel qui n'est pas un inhibiteur enzymatique, en particulier de chlorure de sodium, en poids par rapport au poids de farine.

### Protéases

Par "protéase", "peptidase" ou "enzyme protéolytique" on entend ici toute enzyme hydrolysant les liaisons peptidiques. Ce terme inclut toute enzyme appartenant au groupe d'enzymes EC 3.4. Les protéases sont classées sur la base de leur mécanisme catalytique en sérine protéases, cystéine protéases, aspartate protéases, métalloprotéases et les protéases non classées.

Les protéases utilisées dans le cadre de l'invention peuvent être en particulier des exopeptidases, telles que des aminopeptidases ou des carboxypeptidases, ou des endoprotéases.

Des exemples de protéases appropriées pour mettre en oeuvre l'invention incluent en particulier les métalloprotéases. Ladite au moins une protéase utilisée dans le cadre de l'invention peut en particulier être un mélange de protéases telles que définies ci-dessus. Ainsi, ladite au moins une protéase utilisée dans le cadre de l'invention peut être un mélange de métalloprotéases.

Par "métalloprotéase", on entend ici une famille de protéases dont le site actif contient un ion métallique qui participe à la catalyse de l'hydrolyse de la liaison peptidique.

Les métalloprotéases sont bien connues de l'homme du métier et incluent les métallocarboxypeptidases (appartenant au groupe d'enzyme EC 3.4.17) et les métalloendopeptidases (appartenant au groupe d'enzymes EC 3.4.24).

Les métallocarboxypeptidases incluent typiquement la carboxypeptidase A (EC 3.4.17.1), la carboxypeptidase B (EC 3.4.17.2), la lysine carboxypeptidase (EC 3.4.17.3), la glycine carboxypeptidase (EC 3.4.17.4), l'alanine carboxypeptidase (EC 3.4.17.6), la muramoylpentapeptide carboxypeptidase (EC 3.4.17.8), la carboxypeptidase E (EC 3.4.17.10), la glutamate carboxypeptidase (EC 3.4.17.11), la carboxypeptidase M (EC 3.4.7.12), la muramoyltetrapeptide carboxypeptidase (EC 3.4.17.13), la zinc-D-Ala-D-Ala carboxypeptidase (EC 3.4.17.14), la carboxypeptidase A2 (EC 3.4.17.15), la membrane Pro-Xaa carboxypeptidase (EC 3.7.17.16), la tubulinyl-Tyr carboxypeptidase (EC 3.4.17.17), la carboxypeptidase T (EC 3.4.17.18), la carboxypeptidase Taq (EC 3.4.17.19), la carboxypeptidase U (EC 3.4.17.20), la glutamate caboxypeptidase II (EC 3.4.17.21), la métallocarboxypeptidase D (EC 3.4.17.22) et l'enzyme de conversion de l'angiotensine 2 (EC 3.4.17.23).

Les métalloendopeptidases incluent typiquement l'atrolysine A (EC 3.4.24.1), la collagénase microbienne (EC 3.4.24.3), la leucolysine (EC 3.4.24.6), la collagénase interstitielle (EC 3.4.24.7), la néprilysine (EC 3.4.24.11), l'envelysine (EC 3.4.24.12), la métalloendopeptidase spécifique des IgA (EC 3.4.24.13), la procollagène N-endopeptidase (EC 3.4.24.14), la Pz peptidase (EC 3.4.24.15), la neurolysine (EC 3.4.24.16), la stromélysine 1 (EC 3.4.24.17), la méprine A (EC 3.4.24.18), la procollagène endopeptidase C (EC 3.4.24.19), la peptidyl-lysine métalloendopeptidase (EC 3.4.24.20), l'astacine (EC 3.4.24.21), la stromélysine 2 (EC 3.4.24.22), la matrilysine (EC 3.4.24.23), la gélatinase A (EC 3.4.24.24), la vibriolysine (EC 3.4.24.25), la pseudolysine (EC 3.4.24.26), la thermolysine (EC 3.4.24.27), la bacillolysine (EC 3.4.24.28), l'auréolysine (EC 3.4.24.29), la coccolysine (EC 3.4.24.30), la mycolysine (EC 3.4.24.31), la métalloendopeptidase β-lytique (EC 3.4.24.32), la peptidyl-Asp métalloendopeptidase (EC 3.4.24.33), la neutrophile collagénase (EC 3.4.24.34), la gélatinase B (EC 3.4.24.35), la leishmanolysine (EC 3.4.24.36), la saccharolysine (EC 3.4.24.37), la gamétolysine (EC 3.4.24.38), la deutérolysine (EC 3.4.24.39), la serralysine (EC 3.4.24.40), l'atrolysine B (EC 3.4.24.41), l'atrolysine C (EC 3.4.24.42), l'atroxase (EC 3.4.24.43), l'atrolysine E (EC 3.4.24.44), l'atrolysine F (EC 3.4.24.45), l'adamalysine (EC 3.4.24.46), l'horrilysine (EC 3.4.24.47), la ruberlysine (EC 3.4.24.48), la bothropasine (EC 3.4.24.49), la bothrolysine (EC 3.4.24.50), l'ophiolysine (EC 3.4.24.51), la trimerelysine I (EC 3.4.24.52), la trimerelysine II (EC 3.4.24.53), la mucrolysine (EC 3.4.24.54), la pitrilysine (EC 3.4.24.55), l'insulysine (EC 3.4.24.56), l'*O*-sialoglycoprotéine endopeptidase (EC 3.4.24.57), la russellysine (EC 3.4.24.58), la peptidase intermédiaire mitochondriale (EC 3.4.24.59), la dactylysine (EC 3.4.24.60), la nardilysine (EC 3.4.24.61), la magnolysine (EC 3.4.24.62), la méprine B (EC 3.4.24.63), la processing peptidase mitochondriale (EC 3.4.24.64), l'élastase de macrophage (EC 3.4.24.65), la choriolysine L (EC 3.4.24.66), la choriolysine H (EC 3.4.24.67), la tentoxilysine (EC 3.4.24.68), la bontoxilysine (EC 3.4.24.69), l'oligopeptidase A (EC 3.4.24.70), l'enzyme de conversion de l'endothéline (EC 3.4.24.71), la fibrolase (EC 3.4.24.72), la jararhagine (EC 3.4.24.73), la fragilysine (EC 3.4.24.74), la lysostaphine (EC 3.4.24.75), la flavastacine (EC 3.4.24.76), la snapalysine (EC 3.4.24.77), l'endopeptidase gpr (EC 3.4.24.78), la pappalysine 1 (EC 3.4.24.79), la métalloprotéinase matricielle 1 de type membranaire (EC 3.4.24.80), l'endopeptidase ADAM10 (EC 3.4.24.81), l'endopeptidase ADAMTS-4 (EC 3.4.24.82), l'endopeptidase du facteur létal de l'anthrax (EC 3.4.24.83), l'endopeptidase Ste24 (EC 3.4.24.84), l'endopeptidase S2P (EC 3.4.24.85), l'endopeptidase ASAM17 (EC 3.4.24.86) et l'endopeptidase ADAMTS13 (EC 3.4.24.87).

Les protéases utilisées dans le cadre de l'invention peuvent être de toute origine. Il peut s'agir en particulier de protéases fongiques ou bactériennes, isolées, purifiées ou recombinantes. Les protéases utilisées dans le cadre de la présente invention peuvent provenir de microorganismes génétiquement modifiés ou non.

De préférence, les protéases utilisées dans le cadre de l'invention sont des protéases d'origine fongique ou bactérienne, de préférence d'origine bactérienne.

De manière particulièrement préférée, les protéases utilisées dans le cadre de l'invention sont des métalloprotéases, plus particulièrement des métalloprotéases neutres, en particulier des métalloprotéases fongiques ou bactériennes, de manière particulièrement préférée des métalloprotéases bactériennes.

Les inventeurs ont en particulier montré que les métalloprotéases, en particulier les métalloprotéases bactériennes, plus particulièrement la bacillolysine ou métalloprotéase neutre de *Bacillus subtilis,* permettaient de solubiliser de manière particulièrement efficace les protéines présentes dans la farine, et ainsi de potentialiser l'effet des amylases utilisées lors de la cuisson de cette farine au cours du procédé papetier. Par conséquent, de manière particulièrement préférée, ladite au moins une protéase utilisée dans le cadre de l'invention est une métalloprotéase neutre.

De préférence, les protéases utilisées dans le cadre de l'invention sont des métalloprotéases bactériennes, en particulier des métalloprotéases neutres bactériennes, plus particulièrement des métalloprotéases de *Bacillus subtilis.*

De manière préférée entre toutes, la au moins une protéase utilisée dans le cadre de l'invention est la bacillolysine. En particulier, la au moins une protéase utilisée dans le cadre de l'invention peut être la bacillolysine commercialisée sous le nom Prolyve BS® par Lyven.

Les protéases utilisées dans le cadre de l'invention sont mises en oeuvre à une concentration correspondant à un niveau d'activité enzymatique adapté pour permettre de cliver les protéines présentes dans la farine. De préférence, la composition selon l'invention comprend de 50 à 1000 ppm à 20 000 PNU/g d'au moins une protéase telle que définie ci-dessus, de préférence de 100 à 900 ppm à 20 000 PNU/g, de préférence de 200 à 800 ppm à 20 000 PNU/g, de préférence de 300 à 700 ppm à 20 000 PNU/g, de manière préférée entre toutes 300 ppm à 20 000 PNU/g d'au moins une protéase telle que définie ci-dessus. Autrement dit, de préférence la composition selon l'invention comprend de 1000 à 20 000 PNU d'au moins une protéase telle que définie ci-dessus par kg de composition, de préférence de 2000 à 18 000 PNU, de préférence de 4000 à 16 000 PNU, de préférence de 6000 à 14 000 PNU, de manière préférée entre toutes 6000 PNU d'au moins une protéase telle que définie ci-dessus par kg de composition. De manière particulièrement préférée, la composition selon l'invention comprend 300 ppm à 20 000 PNU/g d'au moins une protéase telle que définie ci-dessus, en particulier d'une métalloprotéase neutre, en particulier de bacillolysine. Autrement dit, de manière particulièrement préférée, la composition selon l'invention comprend 6000 PNU d'au moins une protéase telle que définie ci-dessus, en particulier d'une métalloprotéase neutre, en particulier de bacillolysine, par kg de composition.

Les techniques de mesure de l'activité protéasique sont bien connues de l'homme du métier. Typiquement, on peut doser l'activité protéasique sur de la caséine : la dégradation de ce substrat par des protéases entraîne la libération de peptides qui absorbent dans l'UV à 275 nm. L'évolution de l'absorbance pendant la cinétique d'hydrolyse de cette protéine indique l'importance de la réaction. Typiquement, le milieu réactionnel contient 250 µl de solution de caséine à 7 g/L, pH 7,0 et 50 µL de solution enzymatique. On peut par exemple utiliser une solution de caséine obtenue par dissolution dans un tampon Tris (Trihydroxyméthyl aminométhane) 12,1 g/L à pH 7,0, et réaliser la réaction enzymatique à 41°C. 250 µL d'acide tricholoroacétique tamponné (TCA) additionné de tween 80 à 5% est ajouté après 30 min d'incubation pour stopper la réaction. Après précipitation pendant 15 min à 41°C, la densité optique du surnageant obtenu par centrifugation (15 min à 3000 tour/min) est lue à 275 nm.

Une unité d'activité protéasique (PNU) peut alors être définie comme la quantité d'enzyme qui libére des peptides solubles en quantité telle que la densité optique à 275 nm de l'hydrolysat obtenu après précipitation au TCA est équivalente à celle d'une solution de tyrosine à 120 µg/mL ou 0,66 µmol/mL par minute dans les conditions de pH et de température fixes.

Les protéases utilisées dans le cadre de l'invention peuvent être sous toute forme appropriée pour leur utilisation, en particulier sous forme extraite liquide ou sous forme de poudre stabilisée. De préférence, les protéases utilisées dans le cadre de l'invention sont sous forme de poudre, en particulier pour pouvoir être mélangées facilement à la farine. De manière particulièrement préférée, les protéases présentes dans la composition selon l'invention sont sous forme de poudre stabilisée. De manière également préférée, les protéases ajoutées après la dispersion ou la solubilisation de la composition selon l'invention lors du procédé de fabrication de sauce selon l'invention, sont sous forme extraite liquide.

### Hémicellulases

Par "hémicellulase", on entend ici une classe d'enzymes capables de cliver l'hémicellulose en ses sucres composants ou en des polymères plus petits, qui inclut des endo-hydrolases, des exo-hydrolases et des estérases variées. Des exemples d'hémicellulases sont bien connus de l'homme du métier et incluent les xylanases, les arabinofuranosidases, les acétyl-xylane estérases, les glucuronidases, les endo-galactanases, les mannanases, les endo ou exo-arabinases, les exo-galactanases, et des mélanges de celles-ci. Des exemples d'endo-hémicellulases appropriées pour mettre en oeuvre l'invention incluent les endo-arabinanases, les endo-arabinogalactanases, les endoglucanases, les endo-mannanases, les endo-xylanases, et les feraxane endoxylanases. Des exemples d'exo-hémicellulases appropriées pour mettre en oeuvre l'invention incluent l'α-L-arabinosidase, la β-L-arabinosidase, l'α-1,2-L-fucosidase, l'α-D-galactosidase, la β-D-galactosidase, la β-D-glucosidase, la β-D-glucuronidase, la β-D-mannosidase, la β-D-xylosidase, les exo-glucosidases, les exo-cellobiohydrolases, les exo-mannobiohydrolases, les exo-mannanases, les exo-xylanases, les xylanes α-glucuronidases, et les conifèrine β-glucosidases. Des exemples d'estérases appropriées pour mettre en oeuvre l'invention incluent les acétyl estérases (acétyl xylane estérase, acétylgalactane estérase, acétylmannane estérase, et acétylxylane estérase) et les aryle estérases (acide coumarique estérase et acide ferulique estérase).

De préférence, ladite au moins une hémicellulase utilisée dans le cadre de l'invention est sélectionnée dans le groupe constitué des xylanases et des mélanges de celles-ci.

De préférence, ladite au moins une hémicellulase utilisée dans le cadre de l'invention est une xylanase.

Par "xylanase", on entend ici une protéine ou domaine polypeptidique d'une protéine, capable d'hydrolyser les liaisons β-1,4 glycosyl dans les unités β-D-xylopyranosyl-1,4-β-D-xylopyranosyl non-terminales des xylanes ou arabinoxylanes. Des exemples de xylanases sont bien connus de l'homme du métier et incluent la 1,4-β-D-xylane xylanohydrolase, la 1,4-β-xylane xylanohydrolase, la β-1,4-xylane xylanohydrolase, la (1-4)-β-xylane 4-xylanohydrolase, l'endo-1,4-β-xylanase, l'endo-(1-4)-β-xylanase, l'endo-β-1,4-xylanase, l'endo-1,4-β-D-xylanase, l'endo-1,4-xylanase, la xylanase, la β-1,4-xylanase, la β-xylanase, et la β-D-xylanase. Les endoxylanases peuvent être dérivées de différents organismes tels que des plantes, des champignons (*e.g. Aspergillus*, *Penicillium*, *Disporotrichum*, *Neurospora*, *Fusarium*, *Humicola*, *Trichoderma*), ou des bactéries (*e.g. Bacillus*, *Aeromonas*, *Streptomyces*, *Nocardiopsis*, *Thermomyces*).

Les hémicellulases utilisées dans le cadre de l'invention peuvent être de toute origine. Il peut s'agir en particulier d'hémicellulases fongiques ou bactériennes, isolées, purifiées ou recombinantes. Les hémicellulases utilisées dans le cadre de la présente invention peuvent provenir de microorganismes génétiquement modifiés ou non.

De préférence, les hémicellulases utilisées dans le cadre de l'invention sont des hémicellulases d'origine fongique ou bactérienne, de préférence d'origine fongique.

De manière particulièrement préférée, les hémicellulases utilisées dans le cadre de l'invention sont des xylanases, en particulier des xylanases fongiques ou bactériennes, de manière particulièrement préférée des xylanases fongiques.

Les inventeurs ont en particulier montré que les xylanases, en particulier les xylanases fongiques, plus particulièrement les xylanases de *Trichoderma longibrachiatum*, permettaient d'hydrolyser de manière particulièrement efficace les pentosanes présents dans la sauce dus à l'utilisation de farine, et ainsi d'obtenir et de conserver une viscosité acceptable de la sauce produite.

De préférence, les hémicellulases utilisées dans le cadre de l'invention sont des hémicellulases fongiques, en particulier des xylanases fongiques sélectionnées dans le groupe constitué des xylanases de *Trichoderma longibrachiatum.*

De manière préférée entre toutes, la au moins une hémicellulase utilisée dans le cadre de l'invention, en particulier dans la composition selon l'invention, est une xylanase de *Trichoderma longibrachiatum.*

De manière particulièrement préférée, la au moins une hémicellulase, en particulier la xylanase, utilisée dans le cadre de l'invention, en particulier dans la composition selon l'invention, est obtenue par fermentation, en particulier par fermentation en milieu solide ou liquide, plus particulièrement par fermentation en milieu solide, par *Trichoderma longibrachiatum.* En particulier, la au moins une hémicellulase utilisée dans le cadre de l'invention, en particulier dans la composition selon l'invention, peut être la xylanase de *Trichoderma longibrachiatum* commercialisée sous le nom Panlyve XT® par Lyven.

Les hémicellulases utilisées dans le cadre de l'invention sont ajoutées à la farine de céréales à une concentration correspondant à un niveau d'activité enzymatique adapté pour permettre de cliver les pentosanes présents dans la farine. De préférence, la composition selon l'invention comprend de 10 à 1500 ppm à 1250 AXC/g d'au moins une hémicellulase telle que définie ci-dessus, de manière davantage préférée de 10 à 1000 ppm à 1250 AXC/g d'au moins une hémicellulase telle que définie ci-dessus. Dans un mode de réalisation particulier, la composition selon l'invention comprend de préférence de 200 à 1450 ppm à 1250 AXC/g, de préférence de 300 à 1400 ppm à 1250 AXC/g, de préférence de 400 à 1350 ppm à 1250 AXC/g, de préférence de 500 à 1300 ppm à 1250 AXC/g, de préférence de 600 à 1250 ppm à 1250 AXC/g, de préférence de 700 à 1200 ppm à 1250 AXC/g, de préférence de 800 à 1150 ppm à 1250 AXC/g, de préférence de 900 à 1100 ppm à 1250 AXC/g, de préférence de 950 à 1050 ppm à 1250 AXC/g, de manière davantage préférée 1000 ppm à 1250 AXC/g d'au moins une hémicellulase telle que définie ci-dessus. Dans un autre mode de réalisation particulier, la composition selon l'invention comprend de 10 à 500 ppm à 1250 AXC/g, de préférence de 15 à 400 ppm à 1250 AXC/g, de préférence de 20 à 300 ppm à 1250 AXC/g, de préférence de 25 à 200 ppm à 1250 AXC/g, de préférence de 50 à 100 ppm à 1250 AXC/g, de préférence de 70 à 80 ppm à 1250 AXC/g d'au moins une hémicellulase telle que définie ci-dessus.

Autrement dit, de préférence la composition selon l'invention comprend de 12,5 à 1875 AXC d'au moins une hémicellulase telle que définie ci-dessus par kg de composition, de préférence de 12,5 à 1250 AXC d'au moins une hémicellulase telle que définie ci-dessus par kg de composition. Dans un mode de réalisation particulier, de préférence la composition selon l'invention comprend de 250 à 1812,5 AXC, de préférence de 375 à 1750 AXC, de préférence de 500 à 1687,5 AXC, de préférence de 625 à 1625 AXC, de préférence de 750 à 1562,5 AXC, de préférence de 875 à 1500 AXC, de préférence de 1000 à 1437,5 AXC, de préférence de 1125 à 1375 AXC, de préférence de 1187,5 à 1312,5 AXC, de manière davantage préférée 1250 AXC d'au moins une hémicellulaire telle que définie ci-dessus par kg de composition. Dans un autre mode de réalisation particulier, la composition selon l'invention comprend de 12,5 à 625 AXC, de préférence de 18,75 à 500 AXC, de préférence de 25 à 375 AXC, de préférence de 31,25 à 250 AXC, de préférence de 62,5 à 125 AXC, de préférence de 87,5 à 100 AXC d'au moins une hémicellulase telle que définie ci-dessus par kg de composition. De manière particulièrement préférée, la composition selon l'invention comprend 70 ppm à 1250 AXC/g d'au moins une hémicellulase telle que définie ci-dessus, en particulier d'une xylanase, en particulier d'une xylanase de *Trichoderma longibrachiatum.* Autrement dit, de manière particulièrement préférée, la composition selon l'invention comprend 87,5 AXC d'au moins une hémicellulase telle que définie ci-dessus, en particulier d'une xylanase, en particulier d'une xylanase de *Trichoderma longibrachiatum*, par kg de composition.

Les techniques de mesure de l'activité hémicellulasique, en particulier de l'activité xylanasique, sont bien connues de l'homme du métier. Typiquement, pour mesurer cette activité, on peut faire agir la solution enzymatique sur une solution de xylane d'avoine soluble lié à un chromophore, le Rémazol Brillant Blue R, et mesurer les oligomères libérés par l'action de la solution enzymatique. Ceux-ci sont retrouvés dans la fraction soluble après précipitation à l'éthanol. Le milieu réactionnel préférablement utilisé dans cette méthode est composé de 130 µL de solution d'azo-xylane d'avoine (MEGAZYME) 10 g/L, 50 µL de solution enzymatique diluée dans du tampon acétate 0,2 M, pH 4,70. On effectue de préférence la réaction à 31°C pendant 20 min. La réaction est typiquement arrêtée par ajout de 500 µL d'éthanol à 95% à 31°C. La densité optique du surnageant obtenu après centrifugation (10 min à 3000 tour/min à 20°C) est lue à 590 nm.

Une unité d'activité hémicellulasique, en particulier d'activité xylanasique, (AXC) est alors définie comme la quantité d'enzyme qui, diluée à raison de 1 unité/mL, à pH 4,70 et à 31°C, libère, à partir d'une solution de Rémazol Brillant Blue R xylane, des oligomères non précipitables dans l'éthanol tels que la densité optique du surnageant soit de 0,93 à 590 nm.

De manière également préférée, la au moins une hémicellulase utilisée dans le cadre de l'invention, en particulier dans le bac de retour du procédé d'enduction ou de fabrication de matériau ligno-cellulosique papier - carton enduit ou couché selon l'invention et/ou ajoutée après la dispersion ou la solubilisation de la composition selon l'invention lors du procédé de fabrication de sauce selon l'invention, est la xylanase de *Trichoderma longibrachiatum* commercialisée sous le nom Fylterlyve® par Lyven.

Les hémicellulases utilisées dans le cadre de l'invention peuvent être sous toute forme appropriée pour leur utilisation, en particulier sous forme extraite liquide, sous forme de poudre stabilisée, ou sous forme brute. De manière particulièrement préférée, les hémicellulases présentes dans la composition selon l'invention sont sous forme de poudre stabilisée. De manière également préférée, les hémicellulases ajoutées dans le bac de retour du procédé d'enduction ou de couchage ou de fabrication de papier - carton selon l'invention et/ou après la dispersion ou la solubilisation de la composition selon l'invention lors du procédé de fabrication de sauce selon l'invention, sont sous forme extraite liquide.

### Composition pour l'enduction ou le couchage

La présente invention a pour objet une composition, de préférence pour l'enduction ou le couchage d'un matériau ligno-cellulosique papier - carton, en particulier en défilement continu, comprenant de la farine de céréales telle que définie à la section *"Farine de céréales"* ci-dessus, 100 à 1000 ppm de cystéine telle que définie à la section *"Cystéine"* ci-dessus, 50 à 1000 ppm à 20 000 PNU/g d'au moins une protéase telle que définie à la section *"Protéases",* 10 à 1500 ppm à 1250 AXC/g d'au moins une hémicellulase telle que définie à la section "*Hémicellulases*" ci-dessus et au moins 0,1% d'un sel qui n'est pas un inhibiteur enzymatique tel que défini à la section "*Sel*" ci-dessus, en poids par rapport au poids de farine.

Dans un mode de réalisation particulier, la composition selon l'invention comprend de la farine de céréales telle que définie à la section *"Farine de céréales"* ci-dessus, 100 à 1000 ppm de cystéine telle que définie à la section *"Cystéine"* ci-dessus, 50 à 1000 ppm à 20 000 PNU/g d'au moins une protéase telle que définie à la section *"Protéases",* 10 à 500 ppm à 1250 AXC/g d'au moins une hémicellulase telle que définie à la section "*Hémicellulases*" ci-dessus et au moins 0,1% d'un sel qui n'est pas un inhibiteur enzymatique tel que défini à la section "*Sel*" ci-dessus, en poids par rapport au poids de farine.

Dans un mode de réalisation particulièrement préféré, la composition selon l'invention comprend de la farine de céréales telle que définie à la section "*Farine de céréales*" ci-dessus, 500 ppm de cytéine telle que définie à la section *"Cystéine"* ci-dessus, 300 ppm à 20 000 PNU/g d'au moins une protéase telle que définie à la section *"Protéases"* ci-dessus, 70 ppm à 1250 AXC/g d'au moins une hémicellulase telle que définie à la section "*Hémicellulases*" ci-dessus et 0,25% d'un sel qui n'est pas un inhibiteur enzymatique tel que défini à la section "*Sel*" ci-dessus, en poids par rapport au poids de farine.

Dans un autre mode de réalisation particulièrement préféré, la composition selon l'invention comprend de la farine de blé, 100 à 1000 ppm de L-cystéine, 50 à 1000 ppm à 20 000 PNU/g de métalloprotéase neutre, 10 à 1500 ppm à 1250 AXC/g, en particulier 10 à 500 ppm à 1250 AXC/g, de xylanase et au moins 0,1% de chlorure de sodium, en poids par rapport au poids de farine.

Dans un autre mode de réalisation particulièrement préféré, la composition selon l'invention comprend de la farine de blé, 500 ppm de L-cytéine, 300 ppm à 20 000 PNU/g de métalloprotéase neutre, en particulier de bacillolysine, 70 ppm à 1250 AXC/g de xylanase et 0,25% de chlorure de sodium, en poids par rapport au poids de farine.

La composition selon l'invention peut être préparée par toute technique appropriée bien connue de l'homme du métier, en particulier par mélange des ingrédients et de la farine dans un mélangeur approprié bien connu de l'homme de l'art tel qu'un mélangeur à socs de charrue type Loedige.

La composition selon l'invention peut être sous toute forme appropriée. Elle peut en particulier être sous forme sèche, plus particulièrement sous forme de poudre.

### Amylases

Par "amylase", on entend ici toute enzyme catalysant l'hydrolyse de l'amidon en oligomères pouvant aller jusqu'au glucose. Les amylases incluent en particulier les α-amylases (EC 3.2.1.1), les β-amylases (EC 3.2.1.2) et les γ-amylases (EC 3.2.1.3). Les α-amylases, aussi appelées glycogènases ou 1,4-α-D-glucane glucanohydrolases, clivent l'amidon de manière aléatoire, générant en cas d'hydrolyse poussée du maltotriose et du maltose à partir d'amylose, ou du maltose, du glucose et des dextrines limites à partir d'amylopectine. Les β-amylases, aussi appellées 1,4-α-D-glucane maltohydrolases ou glycogénases, clivent l'amidon à partir de ses extrémités non-réductrices. Plus particulièrement, elles catalysent l'hydrolyse de la deuxième liaison α-1,4 glycosidique, libérant du maltose. Les γ-amylases, aussi appelées glucane 1,4-α-glucosidases, amyloglucosidases, exo-1,4-α-glucosidases, glucoamylases, α-glucosidases lysosomales ou 1,4-α-D-glucane glucohydrolase, clivent les liaisons α-1,6 glycosidiques ainsi que les dernières liaisons α-1,4 glycosidiques des extrémités non-réductrices de l'amylose et de l'amylopectine, libérant du glucose.

De préférence, ladite au moins une amylase utilisée dans le cadre de l'invention est une α-amylase.

Les amylases utilisées dans le cadre de l'invention peuvent être de toute origine. Il peut s'agir en particulier d'amylases fongiques ou bactériennes, isolées, purifiées ou recombinantes. Les amylases utilisées dans le cadre de la présente invention peuvent provenir de microorganismes génétiquement modifiés ou non. Toute amylase conventionnellement utilisée en papeterie peut être mise en oeuvre dans le cadre de l'invention.

De préférence, les amylases utilisées dans le cadre de l'invention sont des amylases d'origine fongique ou bactérienne, de préférence thermostables, c'est-à-dire que l'enzyme est encore active à une température supérieure ou égale à 82°C.

De manière particulièrement préférée, les amylases utilisées dans le cadre de l'invention sont des α-amylases, plus particulièrement des α-amylases fongiques ou bactériennes. En particulier, l'amylase utilisée dans le cadre de l'invention peut être l'α-amylase commercialisée sous le nom Enzy-myl CP® par Adivec.

Les amylases utilisées dans le cadre de l'invention peuvent être sous toute forme appropriée, en particulier sous forme sèche ou liquide, sous forme brute ou extraite, sous forme de poudre ou de granulé. De préférence, les amylases utilisées dans le cadre de l'invention sont sous forme liquide.

### Procédé de fabrication de sauce et sauce obtenue

La présente invention concerne également un procédé (A) de fabrication de sauce comprenant les étapes consistant à :
a) disperser ou solubiliser la composition telle que définie dans la section "*Composition pour l'enduction ou le couchage*" ci-dessus dans de l'eau,
b) ajouter de 100 à 1500 mL par tonne de farine, de préférence 150 à 750 mL par tonne de farine, d'au moins une amylase telle que définie à la section *"Amylases"* ci-dessus à 165 LAU/mL, dans la composition dispersée ou solubilisée à l'étape a),
c) porter et maintenir le mélange obtenu à l'étape b) à une température supérieure ou égale à 75°C de manière à obtenir une sauce, et
d) inactiver les enzymes, en particulier les amylases, présentes dans la sauce obtenue à l'étape c).

Elle a également pour objet un procédé (B) de fabrication de sauce comprenant les étapes consistant à :
a) disperser ou solubiliser dans de l'eau une composition comprenant de la farine de céréales telle que définie à la section *"Farine de céréales"* ci-dessus, 100 à 1000 ppm de cystéine telle que définie à la section *"Cystéine"* ci-dessus, 50 à 1000 ppm à 20 000 PNU/g d'au moins une protéase telle que définie à la section *"Protéases"* ci-dessus, et 10 à 1500 ppm à 1250 AXC/g, de préférence 10 à 500 ppm à 1250 AXC/g, d'au moins une hémicellulase telle que définie à la section *"Hémicellulases"* ci-dessus, en poids par rapport au poids de farine,
b) ajouter, dans la composition dispersée ou solubilisée à l'étape a), au moins 0,1% d'un sel qui n'est pas un inhibiteur enzymatique tel que défini à la section "*Sel*" ci-dessus, en poids par rapport au poids de farine, et de 100 à 1500 mL par tonne de farine, de préférence 150 à 750 mL par tonne de farine, d'au moins une amylase telle que définie à la section *"Amylases"* ci-dessus à 165 LAU/mL,
c) porter et maintenir le mélange obtenu à l'étape b) à une température supérieure ou égale à 75°C de manière à obtenir une sauce, et
d) inactiver les enzymes, en particulier les amylases, présentes dans la sauce obtenue à l'étape c).

La composition peut être mise en suspension ou solubilisée dans l'eau par toute technique bien connue de l'homme du métier. De préférence, cette composition est mise en suspension ou solubilisée dans l'eau à l'étape a) du procédé de fabrication de sauce selon l'invention à une concentration de 10 à 30%, de préférence de 15 à 25%.

De préférence, la composition est mise en suspension ou solubilisée dans de l'eau à une température adaptée aux activités enzymatiques des enzymes présentes et/ou ajoutées dans la composition. Ainsi, dans un mode de réalisation particulier, la composition est mise en suspension ou solubilisée dans de l'eau à une température correspondant à l'activité optimale des protéases et/ou hémicellulases présentes et/ou ajoutées dans la composition. Ainsi, dans un mode de réalisation particulier, l'eau utilisée à l'étape a) du procédé de fabrication de sauce est préalablement préchauffée à la température correspondant à l'activité optimale des protéases et/ou hémicellulases présentes et/ou ajoutées dans la composition.

Les inventeurs ont montré qu'il pouvait être intéressant d'ajouter à la composition mise en suspension ou solubilisée une quantité supplémentaire de protéase et/ou d'hémicellulase, en particulier de xylanase, de préférence sous forme liquide, de manière à améliorer encore les qualités de la sauce obtenue.

Ainsi, dans un mode de réalisation particulier, 500 à 9500 ppm à 2000 PNU/g (équivalent à 50 à 950 ppm à 20 000 PNU/g) d'au moins une protéase telle que définie à la section *"Protéases"* ci-dessus et/ou 125 à 1125 ppm à 1600 AXC/g (équivalent à 160 à 1440 ppm à 1250 AXC/g) d'au moins une hémicellulase telle que définie à la section *"Hémicellulases"* ci-dessus, en poids par rapport au poids de farine, sont ajoutés à l'étape a) du procédé (A) de fabrication de sauce, dans la composition dispersée ou solubilisée, ou à l'étape b) du procédé (B) de fabrication de sauce, dans la composition dispersée ou solubilisée, de préférence avant l'ajout d'amylase.

De préférence, de 1000 à 9000 ppm à 2000 PNU/g d'au moins une protéase telle que définie à la section *"Protéases"* ci-dessus, de manière encore préférée de 1500 à 8500 ppm à 2000 PNU/g, de préférence de 2000 à 8000 ppm à 2000 PNU/g, de préférence de 2500 à 7500 ppm à 2000 PNU/g, de préférence de 3000 à 7000 ppm à 2000 PNU/g, de préférence de 3500 à 6500 ppm à 2000 PNU/g, de préférence de 4000 à 6000 ppm à 2000 PNU/g, de préférence de 4000 à 5500 ppm à 2000 PNU/g, de préférence de 4000 à 5000 ppm à 2000 PNU/g, de préférence de 4000 à 4500 ppm à 2000 PNU/g d'au moins une protéase telle que définie à la section *"Protéases"* ci-dessus, sont ajoutés.

De préférence, de 150 à 1100 ppm à 1600 AXC/g d'au moins une hémicellulase telle que définie à la section *"Hémicellulases"* ci-dessus, de manière encore préférée de 200 à 1000 ppm à 1600 AXC/g, de préférence de 250 à 900 ppm à 1600 AXC/g, de préférence de 300 à 800 ppm à 1600 AXC/g, de préférence de 350 à 700 ppm à 1600 AXC/g, de préférence de 400 à 600 ppm à 1600 AXC/g, de préférence de 400 à 500 ppm à 1600 AXC/g, de préférence de 400 à 450 ppm à 1600 AXC/g d'au moins une hémicellulase telle que définie à la section *"Hémicellulases"* ci-dessus, sont ajoutés.

De préférence, les protéases et/ou hémicellulases ajoutées à cette étape sont sous forme liquide. La forme liquide présente en effet l'avantage de permettre un ajustement plus facile de la quantité d'enzyme ajoutée en fonction des paramètres du procédé de fabrication du papier, notamment du grammage de papier recherché.

De préférence, la composition dispersée ou solubilisée obtenue à l'étape a) du procédé (A) de fabrication de sauce ou à l'étape b) du procédé (B) de fabrication de sauce après l'ajout de sel et après l'ajout éventuel supplémentaire de protéase et/ou d'hémicellulase, tel que défini ci-dessus, est incubée, avant l'ajout d'amylase, dans des conditions appropriées et pendant une période de temps approprié pour permettre la solubilisation des protéines de la farine, qui peut être typiquement déterminée par la mesure de l'azote total organique, par exemple en utilisant la méthode Kjeldahl. Typiquement, la composition est incubée à une température correspondant à l'activité optimale des protéases et/ou hémicellulases présentes et/ou ajoutées dans la composition, pendant environ 30 min, avant l'ajout d'amylase.

L'ajout d'au moins une amylase à l'étape b) du procédé de fabrication de sauce selon l'invention permet d'hydrolyser, lors de l'étape c) du procédé, l'amidon présent dans la farine de céréales de manière à obtenir des chaînes carbonées de longueur adéquate pour l'enduction ou le couchage. Les chaînes carbonées doivent en effet être suffisamment courtes pour pénétrer au coeur du papier ou du carton mais suffisamment longues pour lui conférer la résistance mécanique recherchée.

De préférence, 150 à 750 mL à 165 LAU/mL d'au moins une amylase telle que définie à la section *"Amylases"* ci-dessus, par tonne de farine, de préférence 200 à 700 mL à 165 LAU/mL, 250 à 650 mL à 165 LAU/mL, 300 à 600 mL à 165 LAU/mL, 350 à 550 mL à 165 LAU/mL, 400 à 500 mL à 165 LAU/mL d'au moins une amylase telle que définie à la section *"Amylases"* ci-dessus, par tonne de farine, sont ajoutés à l'étape b) du procédé de fabrication de sauce selon l'invention. Autrement dit, de préférence 16 500 à 247 500 LAU par tonne de farine, de préférence 24 750 à 123 750 LAU, de préférence 33 000 à 115 500 LAU, de préférence 41 250 à 107 250 LAU, de préférence 49 500 à 99 000 LAU, de préférence 57 750 à 90 750 LAU, de préférence 66 000 à 82 500 LAU d'au moins une amylase telle que définie à la section *"Amylases"* ci-dessus par par tonne de farine, sont ajoutés à l'étape b) du procédé de fabrication de sauce selon l'invention.

Dans un mode de réalisation particulier, 500 mL à 165 LAU/mL d'au moins une amylase telle que définie à la section *"Amylases"* ci-dessus, en particulier de l'a-amylase commercialisée sous le nom Enzy-myl CP® par Adivec sont ajoutés par tonne de farine à l'étape b) du procédé de fabrication de sauce selon l'invention.

Les techniques de mesure de l'activité amylasique sont bien connues de l'homme du métier. Typiquement, pour mesurer cette activité, on peut faire agir la solution enzymatique sur une solution d'amidon soluble dont on suit la diminution de coloration lorsqu'elle est mise en présence d'iode. Typiquement, de l'eau dure est préparée par mélange de 10 mL de solution A (2,9 g de chlorure de calcium 2H₂O dans de l'eau distillée complétée à 100 mL), 10 mL de solution B (1,4 g de chlorure de magnésium 6H₂O dans de l'eau distillée complétée à 100 mL) et 10 mL de solution C (2,1 g de bicarbonate de sodium dans de l'eau distillée et complétée à 100 mL) complétés à 1000 mL. La solution d'iode est typiquement préparée à partir de 4 g d'iodure de potassium ajoutés à 0,4 mL de solution stock d'iode préparée préalablement (dissolution successive de 4,4 g d'iodure de potassium et 2,2 g d'iode dans 100 mL d'eau distillée) complétée à 100 mL. Le milieu réactionnel est typiquement composé de 400 µL de solution d'amidon à 20 g/L à 31 °C tamponné à pH 6,6, et de 200 µL de solution enzymatique diluée dans de l'eau dure. Après de préférence 11 min d'incubation à 31°C, on prélève typiquement 40 µL de mélange réactionnel qu'on ajoute typiquement à 200 µL de solution d'iode. On lit de préférence immédiatement l'absorbance à 630 nm. On estime typiquement que l'hydrolyse est terminée lorsque la réaction de la solution d'amidon avec l'iode donne une absorbance à 630 nm équivalente à une solution de référence (couleur de référence).

Une unité d'activité amylasique (LAU) est alors définie comme la quantité d'enzymes permettant l'hydrolyse de 1 g d'amidon par heure dans les conditions données (31°C, pH 6,60).

Le mélange obtenu à l'étape a) du procédé de fabrication de sauce selon l'invention est maintenu, pendant l'étape c), en présence de ladite au moins une amylase active ajoutée à l'étape b) dans des conditions appropriées et pendant une période de temps appropriée pour solubiliser et hydrolyser au moins partiellement les macromolécules de la composition de manière à obtenir une sauce.

De préférence, le mélange obtenu à l'étape a) du procédé de fabrication de sauce selon l'invention est maintenu, pendant l'étape c), en présence de ladite au moins une amylase active ajoutée à l'étape b) dans des conditions appropriées et pendant une période de temps appropriée pour permettre l'obtention d'une sauce de viscosité de 50 à 300 cps, de préférence de 80 à 150 cps, mesurée typiquement avec un appareil Brookfield à 70°C. Typiquement, le mélange obtenu à l'étape a) du procédé de fabrication de sauce selon l'invention est maintenu, pendant l'étape c), en présence de ladite au moins une amylase active ajoutée à l'étape b) pendant environ 60 min dans un procédé discontinu de cuisson de l'amidon avec des paliers de température entre 20°C et 95°C, préférentiellement à 50°C, 82°C et 92°C ou à 50°C, 70°C et 75°C, ou pendant environ 20 min dans un procédé continu de cuisson de l'amidon avec des paliers de température entre 60°C et 95°C ou entre 70 et 75°C.

De préférence, les étapes a) et b) des procédés de fabrication de sauce selon l'invention sont mises en oeuvre dans des cuves, bacs ou enceintes différent(e)s.

Ainsi, dans un mode de réalisation préféré du procédé (A) de fabrication de sauce selon l'invention, l'étape a) est mise en oeuvre dans une cuve, bac ou enceinte, par exemple un bac d'enzymation, d'où la composition dispersée ou solubilisée est ensuite transférée vers une autre cuve, bac ou enceinte, par exemple un cuiseur, dans lequel les étapes b) et éventuellement c) et d) sont mises en oeuvre.

De même, dans un mode de réalisation préféré du procédé (B) de fabrication de sauce selon l'invention, l'étape a), et éventuellement l'ajout de sel de l'étape b), sont mis en oeuvre dans une cuve, bac ou enceinte, par exemple un bac d'enzymation, d'où la composition dispersée ou solubilisée, éventuellement contenant le sel, est ensuite transférée vers une autre cuve, bac ou enceinte, par exemple un cuiseur, dans lequel l'ajout d'amylase de l'étape b), et éventuellement les étapes c) et d), sont mis en oeuvre.

L'étape d) d'inactivation des enzymes présentes dans la sauce, qui permet typiquement de stopper l'hydrolyse des macromolécules de la composition, peut être mise en oeuvre par toute technique conventionnelle bien connue de l'homme du métier. L'inactivation des enzymes peut en particulier être mise en oeuvre par traitement chimique et/ou par traitement thermique.

Les techniques d'inactivation chimique des enzymes, en particulier des amylases, sont bien connues de l'homme du métier, et comprennent par exemple l'ajout d'inhibiteurs enzymatiques, tels que le sulfate de zinc.

Les techniques d'inactivation thermique des enzymes, en particulier des amylases, sont également bien connues de l'homme du métier, et comprennent par exemple un chauffage à une température supérieure ou égale à 95°C, pendant une période de temps appropriée, typiquement pendant 15 min pour une température de 95°C, ou pendant environ 1 min à une température de 125°C sous pression.

Le procédé de fabrication de sauce selon l'invention peut être un procédé continu ou discontinu. Les techniques d'inactivation chimique complétées d'un traitement thermique sont de préférence utilisées lorsque le procédé de fabrication de sauce est discontinu. Les techniques d'inactivation thermique sont de préférence utilisées lorsque le procédé de fabrication de sauce est continu.

Le procédé de fabrication de sauce peut en outre comprendre, après l'étape c), une étape additionnelle d'ajout d'au moins un ingrédient additionnel.

Les ingrédients additionnels pouvant être ajoutés à la sauce peuvent être tout ingrédient additionnel conventionnellement utilisé dans la fabrication des sauces en papeterie. De tels ingrédients additionnels sont bien connus de l'homme du métier et incluent par exemple, sans que la liste soit exhaustive, les pigments ou charges minéraux(les), synthétiques ou organiques, les opacifiants, les liants naturels ou de synthèse, les dispersants, les modificateurs de rhéologie, les substances tensio-actives, les azurants optiques, les colorants, les anti-mousse, les agents de collage et les substances biocides.

Par "pigment ou charge ", on entend ici une matière minérale, synthétique ou organique déposée à la surface du matériau ligno-cellulosique papier - carton pour obtenir du papier - carton allant de pigmenté à couché. Des exemples de pigments utilisés en papeterie sont bien connus de l'homme du métier et incluent, sans que cela soit limitatif, le kaolin, les carbonates tels que le carbonate de calcium broyé ou précipité, l'oxyde de titane, le sulfate de calcium, le talc, des microcapsules en polymères de synthèse et des terres de diatomées.

Par "liant", on entend ici un composé permettant d'agglomérer en masse solide, des particules solides sous forme de poudre ou de granulats et de les faire adhérer solidement au matériau ligno-cellulosique. Les liants utilisés dans le cadre de l'invention peuvent être naturels ou synthétiques. Des exemples de liants sont bien connus de l'homme du métier et incluent l'amidon, la caséine, la colle animale, l'alcool polyvinylique, les latex naturels ou synthétiques, les gommes de guar ou de carouble et la carboxy-methylcellulose.

Par "dispersant", on entend ici un composé permettant de maintenir en suspension des particules se trouvant dans une composition liquide. Des exemples de dispersants sont bien connus de l'homme du métier et incluent l'hexamétaphosphate, le pyrophosphate de sodium, la soude et le polyacrylate de sodium.

Par "modificateur de rhéologie", on entend ici un composé agissant sur la rhéologie de la sauce, en particulier sur sa viscosité, sa capacité de rétention d'eau et sa stabilité. Des exemples de modificateurs de rhéologie sont bien connus de l'homme du métier et incluent des carboxyméthylcelluloses et des polymères acryliques

Par "azurant optique", on entend ici un composé permettant d'améliorer la blancheur du papier - carton. Des exemples d'azurants optiques sont bien connus de l'homme du métier et incluent les acides 4,4'-diaminostilbène-2,2' disulfoniques acylés par des dérivés de l'acide cyanurique, le diaminostilbène et le distyrylbiphényle.

Par "agent de collage", on entend ici un composé permettant d'augmenter la résistance du matériau ligno-cellulosique papier - carton à la pénétration et à l'étalement de liquides aqueux. Des exemples d'agents de collage sont bien connus de l'homme du métier et incluent les émulsions de copolymère styrène - acrylate de butyle, alkyl-cétène dimère, anhydride succinique, et les émulsions de colophane ou colophane renforcée.

Selon les ingrédients additionnels éventuellement ajoutés au cours du procédé de fabrication de sauce, une sauce d'enduction ou de couchage sera obtenue.

Par "sauce d'enduction", on entend ici une composition aqueuse comprenant de la farine de céréales dont l'amidon, les protéines et les hémicelluloses ont été partiellement hydrolysés après traitement enzymatique. La sauce d'enduction peut en outre être complétée par l'ajout d'un ou de plusieurs ingrédients additionnels tels que définis ci-dessus. La sauce d'enduction est de préférence appliquée par presse encolleuse ou film press, de sorte à faire pénétrer la sauce en profondeur dans le matériau ligno-cellulosique papier - carton.

Par "sauce de couchage", on entend ici une sauce d'enduction telle que définie ci-dessus comprenant en outre au moins un pigment ou charge tel que défini ci-dessus, au moins un liant tel que défini ci-dessus et éventuellement d'autres additifs choisis notamment parmi un dispersant, un modificateur de rhéologie, un azurant optique et un anti-mousse, tels que définis ci-dessus, ajoutés comme ingrédients additionnels au cours du procédé de fabrication de la sauce. La sauce de couchage est de préférence appliquée par pelliculage ou couchage à la lame au moyen d'une coucheuse de sorte à maintenir la sauce en surface du matériau ligno-cellulosique papier - carton sous forme d'une surface continue et homogène.

Dans un mode de réalisation particulier, au moins un agent de collage est ajouté à la sauce d'enduction lors du procédé de fabrication de la sauce. Dans un mode de réalisation particulier, le procédé de fabrication de sauce selon l'invention est donc un procédé de fabrication de sauce d'enduction collée. De préférence, l'agent de collage utilisé est une émulsion de copolymère styrène - acrylate de butyle.

La présente invention a également pour objet une sauce, de préférence d'enduction ou de couchage, susceptible d'être obtenue par le procédé de fabrication défini ci-dessus.

De préférence, la sauce selon l'invention comprend de la farine de céréales telle que définie à la section *"Farine de céréales"* ci-dessus, 500 ppm de cystéine telle que définie à la section *"Cystéine"* ci-dessus, 100 ppm à 1000 ppm, de préférence 300 ppm d'au moins une protéase éventuellement inactivée telle que définie à la section *"Protéases"* ci-dessus, 70 à 1500 ppm, de préférence de 70 à 500 ppm, d'au moins une hémicellulase éventuellement inactivée telle que définie à la section "*Hémicellulase*" ci-dessus, et 0,1 à 5%, de préférence 0,25 à 0,5% de sel qui n'est pas un inhibiteur enzymatique tel que défini à la section "*Sel*" ci-dessus.

Dans un mode de réalisation particulier de l'invention, la sauce selon l'invention comprend de la farine de céréales telle que définie à la section *"Farine de céréales"* ci-dessus, 500 ppm de cystéine telle que définie à la section "*Cystéine*" ci-dessus, 100 ppm à 1000 ppm, de préférence 300 ppm, à 20 000 PNU/g d'au moins une protéase éventuellement inactivée telle que définie à la section *"Protéases"* ci-dessus, éventuellement 500 à 9000 ppm, de préférence 4000 ppm, à 2000 PNU/g d'au moins une protéase éventuellement inactivée telle que définie à la section *"Protéases"* ci-dessus, 70 à 1500 ppm, de préférence 70 à 500 ppm, à 1250 AXC/g d'au moins une hémicellulase éventuellement inactivée telle que définie à la section "*Hémicellulase*" ci-dessus, éventuellement 125 à 1125 ppm, de préférence 500 ppm, à 1600 AXC/g d'au moins une hémicellulase éventuellement inactivée telle que définie à la section "*Hémicellulase*" ci-dessus, et 0,1 à 5, de préférence 0,25 à 0,5% de sel qui n'est pas un inhibiteur enzymatique tel que défini à la section "*Sel*" ci-dessus.

Les protéases et hémicellulases éventuellement inactivées présentes dans la sauce peuvent provenir totalement des protéases et hémicellulases de la composition pour l'enduction ou le couchage selon l'invention, ou à la fois des protéases et hémicellulases de la composition pour l'enduction ou le couchage selon l'invention et des protéases et hémicellulases supplémentaires éventuellement ajoutées au cours du procédé de fabrication de sauce avant cuisson défini ci-dessus. Les hémicellulases présentes dans la sauce peuvent également provenir des hémicellulase ajoutées dans le bac de retour comme défini dans la section "*Procédé d'enduction et de fabrication de papier* - *carton*" ci-dessous.

### Procédé d'enduction et de fabrication de papier - carton

Les inventeurs ont démontré que la sauce obtenue par le procédé défini ci-dessus était particulièrement appropriée pour enduire ou coucher un matériau ligno-cellulosique papier - carton, dans la mesure où elle n'engendrait pas les problèmes de formation d'agglomérats observés dans l'état de la technique et conservait une viscosité acceptable pour une enduction de matériau ligno-cellulosique papier - carton en défilement continu.

La présente invention concerne donc également un procédé d'enduction ou de couchage d'un matériau ligno-cellulosique papier - carton comprenant les étapes consistant à :
a) fabriquer une sauce, en particulier d'enduction ou de couchage, par le procédé de fabrication tel que défini à la section "*Procédé de fabrication de sauce et sauce obtenue*" ci-dessus,
b) enduire ou coucher un matériau ligno-cellulosique papier - carton avec la sauce obtenue à l'étape a), et
c) éventuellement récupérer, dans un bac de retour, le surplus de sauce après enduction ou couchage du matériau ligno-cellulosique papier - carton à l'étape b).

Par "enduction", on entend ici l'opération consistant dans l'application, de préférence au moyen d'une presse encolleuse ou film press, sous pression, d'une sauce appropriée, en profondeur d'un papier - carton pour renforcer des propriétés existantes telles que la résistance superficielle ou lui conférer des propriétés nouvelles.

Par "couchage", on entend ici l'opération qui consiste à couvrir de manière uniforme, de préférence par pelliculage ou par une coucheuse à lame, la surface d'un papier - carton d'une ou de plusieurs couches de sauce de couchage, sans faire pénétrer en profondeur cette sauce, afin de conférer au papier - carton des propriétés d'imprimabilité, de barrière ou des propriétés nouvelles.

L'étape b) d'enduction ou de couchage du matériau ligno-cellulosique papier - carton peut être mise en oeuvre par toute technique bien connue de l'homme du métier. En particulier, la sauce peut être appliquée au moyen d'une presse encolleuse ("size-press"), d'une « film-press » (« metering size-press » ou presse par transfert de film), d'une coucheuse à lame, d'une coucheuse à crayon, d'une coucheuse à lame d'air ou d'une coucheuse à rideau. De préférence, la sauce est déposée sur le matériau papier - carton à l'étape b) du procédé d'enduction au moyen d'une size-press ou presse encolleuse. De préférence, la sauce est déposée sur le matériau papier - carton à l'étape b) du procédé de couchage au moyen d'une coucheuse à lame.

De préférence, lors de cette étape b) d'enduction ou de couchage, une couche de 0,5 g/m² à 30 g/m² de sauce est déposée sur le papier - carton, de préférence de 1 g/m² à 15 g/m², de préférence de 3 g/m² à 6 g/m².

Les techniques de dépôt de sauce, en particulier les techniques mettant en oeuvre une size-press ou presse encolleuse ou une coucheuse, sont associées à un recyclage du surplus de sauce déposée sur le papier - carton. Par conséquent, dans certains modes de réalisation de l'invention, le procédé d'enduction ou de couchage comprend une étape c) de récupération, dans un bac de retour, du surplus de sauce après dépôt sur le papier - carton à l'étape b). Le surplus de sauce après dépôt sur le papier - carton à l'étape b) peut éventuellement être filtré, typiquement par toute technique de filtration bien connue de l'homme du métier. Le surplus de sauce ainsi récupéré dans l'étape d) peut ensuite être mélangé avec de la sauce nouvellement fabriquée avant nouvelle utilisation dans le procédé d'enduction ou de couchage selon l'invention ou dans le procédé de fabrication de matériau ligno-cellulosique papier - carton enduit ou couché selon l'invention.

Les inventeurs ont démontré que les pentosanes initialement présents dans la sauce avaient tendance à être concentrés dans le bac de retour, pouvant entraîner une augmentation rapide de la viscosité dans ces bacs de retour, limitant ainsi l'emploi de cette sauce dans la fabrication en procédé continu du papier - carton. Ils ont de plus démontré que ce problème pouvait être surmonté en ajoutant, directement dans le bac de retour, des hémicellulases.

Par conséquent, dans un mode de réalisation particulièrement préféré du procédé d'enduction ou de couchage selon l'invention, au moins 300 ppm, de préférence au moins 500 ppm à 1250 AXC/g d'au moins une hémicellulase telle que définie dans la section "*Hémicellulases*" ci-dessus sont ajoutés dans le bac de retour.

La présente invention concerne également un procédé de fabrication d'un matériau ligno-cellulosique papier - carton enduit ou couché, comprenant une étape d'enduction ou de couchage d'une matrice fibreuse ligno-cellulosique avec une sauce telle que définie dans la section *"Procédé de fabrication de sauce et sauce obtenue"* ci-dessus.

De préférence, le procédé de fabrication d'un matériau ligno-cellulosique papier - carton enduit ou couché, selon l'invention comprend les étapes consistant à :
a) fabriquer une sauce par le procédé de fabrication tel que défini dans la section *"Procédé de fabrication de sauce et sauce obtenue"* ci-dessus, et
b) enduire ou coucher une matrice fibreuse ligno-cellulosique avec la sauce obtenue à l'étape a),
c) récupérer le papier - carton enduit ou couché obtenu à l'étape b).

Par "matériau ligno-cellulosique papier - carton", on entend ici une famille de matériaux se présentant sous forme de bandes ou de feuilles fabriquées par dépôt de fibres végétales, en suspension fluide, seules ou mélangées à d'autres substances végétales, minérales, animales ou synthétiques, sur un dispositif de formation approprié. Le papier - carton peut être produit à partir de fibres vierges, recyclées ou un mélange de celles-ci.

Par "papier - carton enduit", on entend ici un matériau papier - carton qui a été soumis à un procédé d'enduction tel que défini ci-dessus.

Par "papier - carton couché", on entend ici un matériau papier-carton qui a été soumis à un procédé de couchage tel que défini ci-dessus.

Par "matrice fibreuse ligno-cellulosique", on entend ici la feuille de papier - carton obtenue après dépôt d'une pâte à papier fortement diluée sur une table de formation, consolidée par compression dans des presses, égouttée et séchée suffisamment pour pouvoir être manipulée ou transformée. La pâte à papier peut être toute pâte à papier conventionnellement utilisée en papeterie, en particulier les pâtes mécaniques, thermo-mécaniques, les pâtes chimiques ou mi-chimiques, les pâtes chimico-thermo-mécaniques ou les pâtes recyclées, les pâtes obtenues à partir de bois ou de plantes annuelles.

Le dépôt de la sauce à l'étape b) du procédé de fabrication de matériau ligno-cellulosique papier - carton enduit ou couché selon l'invention peut être mis en oeuvre par toute technique conventionnellement utilisée en papeterie, en particulier par les techniques mentionnées ci-dessus concernant le procédé d'enduction ou de couchage selon l'invention.

En particulier, le procédé de fabrication de matériau ligno-cellulosique papier - carton selon l'invention peut comprendre une étape b') de récupération, dans un bac de retour, du surplus de sauce après enduction ou couchage de la matrice fibreuse ligno-cellulosique à l'étape b), comme décrit ci-dessus. Dans un mode de réalisation particulièrement préféré du procédé de fabrication de matériau ligno-cellulosique papier - carton enduit ou couché selon l'invention, au moins 300 ppm, de préférence au moins 500 ppm, de préférence au moins 1000 ppm, à 1250 AXC/g d'au moins une hémicellulase telle que définie dans la section "*Hémicellulases*" ci-dessus sont ajoutés dans le bac de retour.

Le procédé de fabrication de matériau ligno-cellulosique papier - carton enduit ou couché selon l'invention peut en outre comprendre toute étape conventionnelle des procédés de fabrication de papier - carton enduit ou couché de l'état de la technique. Le procédé de fabrication de matériau ligno-cellulosique papier - carton enduit ou couché selon l'invention peut ainsi comprendre une étape d) de séchage du matériau ligno-cellulosique papier - carton enduit ou couché et/ou une étape e) d'enroulement et/ou de conditionnement du papier - carton enduit ou couché.

Dans un mode de réalisation particulièrement préféré de l'invention, le procédé de fabrication de matériau ligno-cellulosique papier - carton enduit ou couché comprend les étapes consistant à :
a) fabriquer une sauce par le procédé de fabrication tel que défini dans la section *"Procédé de fabrication de sauce et sauce obtenue"* ci-dessus,
a'1) déposer une pâte à papier sur une table de formation,
a'2) presser la matrice fibreuse ligno-cellulosique obtenue à l'étape a'1) dans des presses,
a'3) sécher au moins partiellement la feuille de matrice fibreuse ligno-cellulosique obtenue à l'étape a'2),
b) enduire ou coucher la matrice fibreuse ligno-cellulosique obtenue à l'étape a'3) avec la sauce obtenue à l'étape a),
b') éventuellement récupérer, dans un bac de retour, le surplus de sauce après enduction ou couchage de la matrice fibreuse ligno-cellulosique à l'étape b), au moins 300 ppm, de préférence au moins 500 ppm, de préférence au moins 1000 ppm à 1250 AXC/g d'au moins une hémicellulase telle que définie dans la section "*Hémicellulases*" ci-dessus étant de préférence ajoutés dans le bac de retour,
c) récupérer le matériau ligno-cellulosique papier - carton enduit ou couché obtenu à l'étape b),
d) sécher le matériau ligno-cellulosique papier - carton enduit ou couché, et
e) enrouler le matériau ligno-cellulosique papier - carton enduit ou couché séché à l'étape d).

La présente invention concerne également l'utilisation de la composition telle que définie à la section "*Composition*" ci-dessus ou de la sauce telle que définie à la section *"Procédé de fabrication de sauce et sauce obtenue"* ci-dessus pour enduire ou coucher du papier - carton.

La présente invention concerne également un papier - carton enduit ou couché susceptible d'être obtenu par le procédé d'enduction ou de couchage tel que défini ci-dessus ou par le procédé de fabrication de matériau ligno-cellulosique papier - carton enduit ou couché tel que défini ci-dessus.

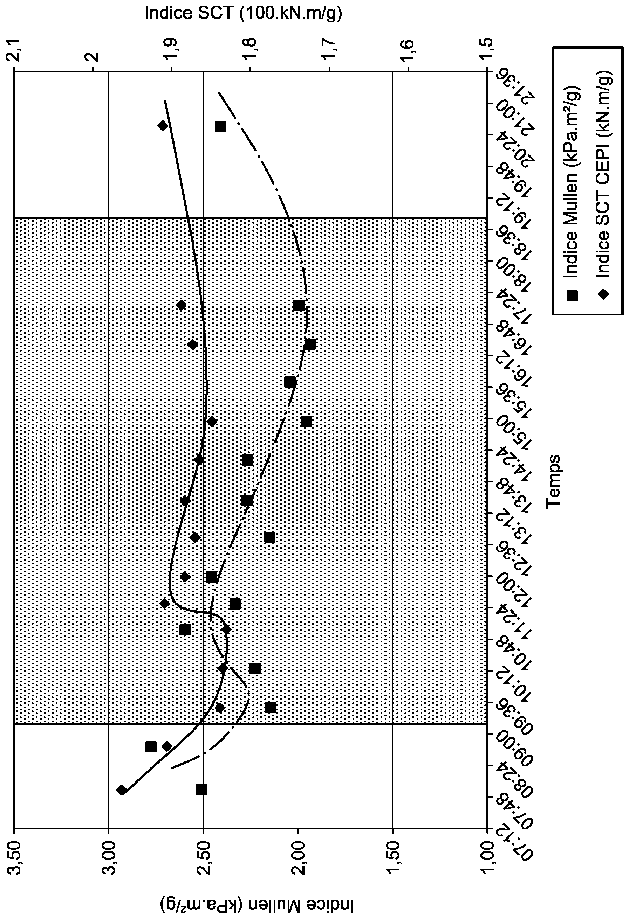

La présente invention sera décrite plus en détail par la figure et les exemples ci-dessous.

### Brève description de la figure

La Figure est un graphe représentant l'évolution des indices Mullen et SCT au cours du temps sur les essais 1 à 8 de l'exemple 4.

### Exemples

### Exemple 1 : Démonstration de l'effet du NaCl sur la viscosité de la sauce

Cet exemple démontre que le NaCI a un effet positif sur la viscosité de la sauce à des doses beaucoup plus faibles que d'autres sels utilisés classiquement en papeterie.

### Matériel et méthodes

### Préparation de la sauce

5 g de farine ont été mélangés à 500 ppm de cystéine L-cystéine HCL Anhydre (commercialisée par Quimdis), 300 ppm de bacillolysine (Prolyve BS® conc commercialisée par Lyven) ayant une activité de 20 000 PNU/g (protéase neutre) et 70 ppm de xylanase de *Trichoderma longibrachiatum* (Panlyve XT® commercialisée par Lyven) ayant une activité de 1250 AXC/g. 2 à 6% de NaCI ont été ajoutés dans la farine (soit 0,1 à 0,3 g) ou 1000 µl de ZnSO₄ à 33% (soit 0,3 g) en fin de palier de température à 81°C.

Après solubilisation du mélange de farine et d'ingrédients dans 25 g d'eau, 5 µL d'amylase à 165 LAU/mL d'Enzy-myl CP® provenant de Adivec ont été ajoutés et le mélange a été cuit selon le protocole ci-dessous.

### Mesure de la viscosité

La viscosité a été mesurée au moyen de l'analyseur rapide de viscosité (rhéomètre) RVA 4500 commercialisé par Perten.

Les cycles de mesure décrits dans le protocole 1 et dans le protocole 2 ont été lancés :

**Protocole 1 = cycle de cuisson et d'hydrolyse de l'amidon :**

| **Temps** | **Type de fonction** | **Valeur de consigne** |
|---|---|---|
| 0 | Température | 50°C |
| 0 | Vitesse | 960 rpm |
| 10 s | Vitesse | 160 rpm |
| 5 min | Température | 50°C |
| 10 min | Température | 63°C |
| 15 min | Température | 63°C |
| 20 min | Température | 81°C |
| 27 min | Température | 81°C |
| 27 min 1 sec | FIN | |

Le ZnSO₄ a été ajouté à 27 min (1000 µl d'une solution à 33% de ZnSO₄). Il a pour effet de stopper l'hydrolyse de l'amidon par inhibition des amylases. Le cycle de mesure a ensuite repris avec le protocole 2.

**Protocole 2 = cycle de fin de cuisson :**

| Temps | Type de fonction | Valeur de consigne |
|---|---|---|
| 0 | Température | 81°C |
| 0 | Vitesse | 960 rpm |
| 10 s | Vitesse | 160 rpm |
| 5 min | Température | 92°C |
| 15 min | Température | 92°C |
| 20 min | Température | 70°C |
| 30 min | Température | 70°C |
| 30 min 1 s | FIN | |

### Résultats

Les inventeurs ont démontré un effet dose du NaCI sur la viscosité de la sauce mesurée au RVA après application des protocoles 1 et 2.

| | Viscosité stabilisée à 90°C |
|---|---|
| Témoin (sans NaCl ni ZnSO₄) | 7 cP |
| ZnSO₄ à 33% 1000 µl (soit 0,3 g) | 93 cP |
| NaCl 0,1 g | 126 cP |
| NaCl 0,15 g | 153 cP |
| NaCl 0,2 g | 189 cP |
| NaCl 0,3 g | 485 cP |

Avec une dose en très large excès de ZnSO₄ à 0,3 g, la viscosité à chaud des sauces de farine a atteint une valeur bien inférieure à la valeur de viscosité obtenue en présence de NaCl : l'amidon des sauces de farines subit une hydrolyse spontanée bien que les amylases aient été inhibées en présence de ZnSO₄.

De façon surprenante, les inventeurs ont observé que l'ajout de NaCl permet de stabiliser la viscosité des sauces. Il n'est pas connu que le NaCl soit ajouté en papèterie, ni que le NaCl ait un rôle d'inhibiteur sur les activités amylasiques.

Ainsi quelle que soit la dose de sel ajoutée à la farine, plus il y a de sel, plus la viscosité de la sauce se stabilise à une valeur élevée. Le sel pourrait donc avoir un rôle protecteur sur l'amidon en prévenant l'hydrolyse spontanée de l'amidon.

Des doses en excès de ZnSO₄ pour stabiliser la viscosité de la sauce ont ainsi pu être remplacées, avec des résultats supérieurs, par des doses inférieures de NaCl.

### Exemple 2 : Démonstration de l'intérêt du NaCl dans un process industriel d'enduction du papier

Cet exemple démontre que le NaCl dans la farine permet d'utiliser efficacement la farine comme substitut d'amidon natif dans le process industriel d'enduction du papier.

### Matériel et méthodes

### Protocole de l'essai industriel

Les essais industriels ont été réalisés sur ligne avec enduction à la size-press d'une sauce préparée à partir d'une farine T55 à laquelle les ingrédients suivants ont été ajoutés :
- 500 ppm de L-cystéine HCL Anhydre (commercialisée par Quimdis)
- 300 ppm de protéases (Prolyve BS® concentrée commercialisée par Lyven) ayant une activité de 20 000 PNU/g
- 70 ppm de xylanases (Panlyve XT® commercialisée par Lyven) ayant une activité de 1250 AXC/g
- 0,75%, 0,5% et 0,25% de sel Fourn sel® (NaCl en poudre commercialisé par Salins) pour les essais 1, 2 et 3.

La xylanase Panlyve XT® commercialisée par Lyven, sous forme solide, a été ajoutée à la main dans les retours de size press, à la dose de 2 mg à 1250 AXC/g toutes les 15 min pour l'essai 2.

Pour l'essai 3, la xylanase Fylterlyve AXC 1500 L® commercialisée par Lyven, sous forme liquide, a été ajoutée à la main dans les retours de size press à l'aide d'une pipette graduée toutes les 15 min à la dose de 20 g à 1500 AXC/g par heure.

Ces retours vont dans les bacs finaux en passant par les tamis vibrants.

Les adjuvants standards utilisés pour les cuissons et l'enduction du papier sont :
- α-amylase : Enzy-myl CP® commercialisée par Adivec ;
- Sulfate de zinc : sulfate de zinc à 30% commercialisé par Floridienne Chimie SA ;
- Agent de collage : copolymère styrène - acrylate de butyle commercialisé par BASF;
- PAC 18: Polychlorure d'aluminium à 18% commercialisé par EKA CHIMIE.

La viscosité et le taux de matières sèches dans le bac de stockage et dans le bac final (ou bac de retour), ont été déterminés à partir de prélèvements de sauce effectués dans le le bac de stockage 10 min après l'ajout de sulfate de zinc et dans le bac final.

Les objectifs industriels des valeurs de viscosité sont les suivants :

| **Dépose (%)** | **Grammage (g/m²)** | **Viscosité bac de stockage mesurée à 70°C (cps) 10 min après ZnSO₄** | **Viscosité bac final mesurée à 50°C (cps)** |
|---|---|---|---|
| 3.5 - 4,5 | > 160 | 100 | 40 - 50 |
| 4 - 5 | < 140 | 150 - 170 | 20 - 40 |

Il n'y a pas d'objectif de viscosité avant ajout de sulfate de zinc ni à 5 min après ajout.

Des tests SCT (*"Short span compression test"*) et CMT ("*Concorra Medium Test"*) ont également été réalisés pour chaque essai.

Les valeurs témoins ont été mesurées en marche industrielle en régime permanent avec de la sauce constituée d'amidon natif de maïs.

L'essai 1 a été effectué avec du NaCl dans la farine mais sans ajout de xylanase dans les retours de size-press.

L'essai 2 a été effectué avec du NaCl dans la farine et ajout de xylanase dans les retours de size-press, sur du papier de grammage 120 g/m².

L'essai 3 a été effectué avec du NaCl dans la farine et ajout de xylanase dans les retours de size-press, sur du papier de grammage 170 g/m².

### Mesure de la viscosité

La viscosité a été mesurée à l'aide d'un appareil Brookfield à 100 tours par minute et à 70°C ou 50°C, comme décrit dans l'Exemple 1.

### Mesure du taux de matière sèche

Un échantillon de sauce a été prélevé et environ 1 g de cet échantillon a été mis dans une coupelle en aluminium préalablement pesée (Mc). La masse de la coupelle avec l'échantillon a été mesurée (Mh). La coupelle a ensuite été mise à l'étuve à 105°C pendant 5 h minimum et la coupelle séchée a ensuite été pesée (Ms).

Le taux de matière sèche, exprimé en pourcentage, est égal à 100x(Ms-Mc)/(Mh-Mc).

### Mesure de la résistance à l'éclatement

La mesure de la résistance à l'éclatement a été réalisée selon la norme ISO 2758.

### Mesure du grammage

Le grammage a été mesuré selon la norme ISO 536. L'indice Mullen est le rapport de la résistance à l'éclatement sur le grammage.

### Short span compression test

Le Short span compression test a été réalisé selon la norme ISO 9895.

### Concorra Medium Test

Le Concorra Médium Test a été réalisé selon la norme ISO 7263.

### Résultats

### Essai 1

Les mesures de viscosité suivantes ont été obtenues sur ligne industrielle, dans le cuiseur à la fin de la cuisson et avant transfert dans le bac final.

| **Essai** | **Amidon ou farine dans le cuiseur (kg)** | **α-amylases (g)** | **ZnSO₄ (kg)** | **Sel (%)** | **Viscosité bac de stockage à 70°C (cps) avant ZnSO₄** | **Viscosité bac de stockage à 70°C (cps) 10 min après ZnSO₄** |
|---|---|---|---|---|---|---|
| Témoin amidon maïs | 1000 | 1000 | 14 | 0 | - | 123 |
| essai 1-1 | 1000 | 165 | 19 | 0,50% | 980 | 580 |
| essai 1-2 | 1000 | 165 | 19 | 0,75% | 1620 | 646 |
| essai 1-3 | 920 | 535 | 19 | 0,50% | 217 | 112 |
| essai 1-4 | 920 | 535 | 19 | 0,25% | 175 | 91 |

Ces essais montrent que la dose de NaCl et la dose d'amylase sont des facteurs de variation de la viscosité finale de la sauce. Les doses croissantes d'amylase ont été accompagnées d'une viscosité décroissante. Quand la dose de NaCl a été augmentée, la viscosité a été stabilisée à une valeur supérieure pour une même quantité d'amylase et de farine.

### Essai 2

Les conditions de l'essai étaient les suivantes :

| **Essai** | **farine (kg)** | **α-amylases (g)** | **ZnSO₄ (kg)** | **Sel (%)** | **Viscosité bac de stockage à 70°C (cps) 10 min après ZnSO₄** |
|---|---|---|---|---|---|
| Essai 2 | 1000 | 250 | 19 | 0,5 | 140 |

Les caractéristiques du papier obtenu pour l'essai 2 sont les suivantes :

| | **Grammage (g/m²)** | **Indice SCT (100*kN*m/g)** | **Indice CMT (N*m²/g)** | **Indice Mullen (kPa*m²/g)** | **Dépose (%)** |
|---|---|---|---|---|---|
| Témoin | 121 | 1.9 | 1.79 | 2.31 | 4,5 |
| Essai 2 | 120 | 1.91 | 1.79 | 2.46 | 4,5 |

Le témoin correspond à l'utilisation d'amidon de maïs natif au lieu de la farine.

La viscosité finale obtenue dans l'essai 2 était à l'objectif, pour cette ligne industrielle et pour un papier inférieur à 140 g/m², *i.e.* 160 cps à 70°C en sortie cuisson et 35 cps dans le bac final.

Les mesures de caractéristiques mécaniques du papier (grammage léger 120 g/m²) montrent que les caractéristiques mécaniques (indice SCT, indice CMT, indice Mullen) sont équivalentes à la référence obtenue avec de l'amidon natif, voire meilleures (indice Mullen) pour un même taux de dépose à 4,5 %.

### Essai 3

L'essai industriel 3 a permis de vérifier que les mêmes résultats pouvaient être obtenus en grammage lourd (160-200 g/m²).
Les conditions de l'essai étaient les suivantes :

| **Essai** | **farine (kg)** | **α-amylases (g)** | **ZnSO₄ (kg)** | **Sel (%)** | **Viscosité bac de stockage à 70°C (cps) 10 min après ZnSO₄** |
|---|---|---|---|---|---|
| Essai 3 | 1000 | 400 | 19 | 0,5 | 113 |

Les caractéristiques du papier obtenu pour l'essai 3 sont les suivantes :

| | **Grammage (g/m²)** | **Indice SCT (100*kN*m/g)** | **Indice CMT (N*m²/g)** | **Indice Mullen (kPa*m²/g)** | **Dépose (%)** |
|---|---|---|---|---|---|
| Témoin | 165 | 1.99 | 1.99 | 2.65 | 4 |
| Essai 3 | 168 | 1.83 | 2.07 | 2.54 | 4 |

A dépose égale (4%), une perte de 8% sur l'indice SCT a été compensée par un gain de 4% sur l'indice CMT, ce qui correspond à l'orientation des fibres de cellulose dans le sens du déroulement de la feuille. Les inventeurs ont constaté une perte de 4% sur l'indice Mullen, qui reste cependant proche de l'objectif à 2,6.

L'industriel papetier peut donc aisément appliquer la solution technique de l'invention en fonction des différents grammages avec des objectifs de qualité papier conformes aux objectifs traditionnels.

### Exemple 3 : Intérêt de l'ajout de xylanases dans le bac final

Cet exemple démontre que l'ajout supplémentaire de xylanases dans le bac final permet de conserver une viscosité de la sauce proche de l'objectif, en régime permanent avec recyclage de la sauce, et ce même après plusieurs heures d'utilisation.

### Matériel et méthodes

### Protocole de l'essai industriel

Les essais industriels ont été réalisés sur ligne avec enduction à la size-press d'une sauce préparée à partir d'une farine T55 à laquelle les ingrédients suivants ont été ajoutés :
- 500 ppm de L-cystéine HCL Anhydre (commercialisée par Quimdis)
- 300 ppm de protéases (Prolyve BS® concentrée commercialisée par Lyven) ayant une activité de 20 000 PNU/g
- 70, 200 ou 500 ppm de xylanases (Panlyve XT® commercialisée par Lyven) ayant une activité de 1250 AXC/g
- 0, 0,25% ou 0,5% de sel Fourn sel® (NaCl en poudre commercialisé par Salins).

Pour l'essai 6, la xylanase Panlyve XT® commercialisée par Lyven, sous forme solide, a été ajoutée à la main dans les retours de size press, à la dose de 2 mg à 1250 AXC/g toutes les 15 min.

Pour l'essai 6, la xylanase Fylterlyve AXC 1500 L® commercialisée par Lyven, sous forme liquide, a été ajoutée à la main dans les retours de size press à l'aide d'une pipette graduée toutes les 15 min à la dose de 20 g à 1500 AXC/g par heure.

Ces retours vont dans les bacs finaux en passant par les tamis vibrants.

L'essai 4 a été effectué sans NaCl dans la farine et sans ajout de xylanase dans les retours de size-press. Le grammage du papier est de 170 g/m².

L'essai 5 a été effectué avec du NaCl dans la farine mais sans ajout de xylanase dans les retours de size-press.

L'essai 6 a été effectué avec différentes quantités de NaCl et de xylanases dans la farine et ajout de xylanase dans les retours de size-press.

### Mesure de la viscosité

La viscosité a été mesurée à l'aide d'un appareil Brookfield à 100 tours par minute et à 70°C, comme décrit dans l'Exemple 1.

### Mesure de la résistance à l'éclatement

La mesure de la résistance à l'éclatement a été réalisée selon la norme ISO 2758.

### Mesure du grammage

Le grammage a été mesuré selon la norme ISO 536. L'indice Mullen est le rapport de la résistance à l'éclatement sur le grammage.

### Résultats

### Essai 4

Les conditions de l'essai et valeurs de viscosité et d'indice Mullen obtenues au cours de l'essai 4 étaient les suivantes.

| Temps | Cystéine (ppm) | Xylanase (ppm) | Protéase (ppm) | Alpha amylase (ppm) | NaCl | Viscosité bac final (cps) | Dépose (%) | **Indice Mullen (kPa*m²/g)** |
|---|---|---|---|---|---|---|---|---|
| T₀ = 10h | 500 | 70 | 300 | 550 | 0 | 32 | 4 | 2.48 |
| 11h08 | 500 | 70 | 300 | 550 | 0 | 43 | 4 | 2.32 |
| 12h38 | 500 | 70 | 300 | 550 | 0 | 57 | 4 | 2.23 |
| 14h43 | 500 | 70 | 300 | 550 | 0 | 63 | 4 | 2.16 |

Au fil de l'essai 4, les inventeurs ont pu noter que la viscosité augmentait progressivement dans le bac final au-dessus de l'objectif industriel à 35 cps, et ce alors que, selon l'hypothèse des inventeurs, l'hydrolyse spontanée de l'amidon se poursuit en l'absence de NaCl. Quant à l'indice Mullen, il a diminué significativement de 13%, ce qui est en dessous de l'objectif industriel papetier (en amidon, 2,6).

Les inventeurs ont alors émis l'hypothèse que la hausse de viscosité était liée à une concentration progressive d'éléments dans le bac final, via le système des retours. Une hypothèse serait que, contre toute attente, les pentosanes soient insuffisamment hydrolysés en fin de cuisson de la sauce et se concentrent via les retours.

### Essais 5 et 6 (papier de grammage de 170 g/m² ; dépose de 4,5%)

La viscosité du surplus de sauce après enduction a été mesurée avant que le surplus ne soit ré-incorporé dans le bac final.

Les conditions de l'essai et valeurs de viscosité obtenues au cours des essais 4 et 5 étaient les suivantes.

| | Cystéine (ppm) | Xylanase (ppm) | Protéase (ppm) | Alpha amylase (ppm) | Sel | Xylanase Bac final (ppm) | Viscosité retours (cps) | Viscosité bac final (cps) |
|---|---|---|---|---|---|---|---|---|
| Essai 5 | 500 | 70 | 300 | 460 | 0.5% | 0 | 200 | 62 |
| Essai 6.1 | 500 | 500 | 300 | 580 | 0.25% | 1000 | 48 | 39 |
| Essai 6.2 | 500 | 200 | 300 | 480 | 0.25% | 500 | 52 | 42 |
| Essai 6.3 | 500 | 500 | 300 | 450 | 0.25% | 300 | 104 | 62 |

Le premier résultat de ces essais est que la hausse de viscosité est bien liée à la concentration des pentosanes lors d'une production en régime permanent, puisqu'il est possible de prévenir cet effet par ajout de xylanase dans le bac final.

Ces résultats montrent également que même en ajoutant une dose de 500 ppm de xylanase dans la farine, au bout de plusieurs heures de fonctionnement en régime permanent il n'est plus possible de maintenir une viscosité optimale. La viscosité des retours size press, dans lesquels se concentrent les pentosanes, est à l'origine de la hausse de viscosité du bac final.

La comparaison entre les essais 5 et 6 montre que la xylanase est encore plus efficace lorsqu'elle est ajoutée dans le bac final, puisque l'ajout de 200 ppm dans la farine + 500 ppm dans le bac final (soit 700 ppm en tout, essai 6.2) a un impact supérieur à un ajout de 500 ppm dans la farine + 300 ppm dans le bac final (soit 800 ppm en tout, essai 6.3).

Il ressort donc de ces essais qu'un ajout de xylanases dans le bac final est plus adapté à un fonctionnement en régime permanent, et que la viscosité des retours est directement fonction de la dose de xylanase.

Cet exemple démontre que l'ajout de xylanases dans le bac final permet de piloter la viscosité de la sauce en procédé continu avec recyclage de la sauce.

### Exemple 4 : Intérêt de l'ajout supplémentaire de protéases et de xylanases dans le bac d'enzymation

Cet exemple démontre que l'ajout supplémentaire de protéases et de xylanases dans le bac d'enzymation permet de fabriquer en continu pendant une journée entière du papier avec des propriétés en conformité avec la cible qualité.

### Matériel et méthodes

### Protocole de l'essai industriel

Les essais industriels ont été réalisés sur ligne avec enduction à la size-press d'une sauce préparée à partir d'une farine à laquelle les ingrédients suivants ont été ajoutés :
- 500 ppm de L-cystéine HCL Anhydre (commercialisée par Quimdis)
- 300 ppm de protéases (Prolyve BS® concentrée commercialisée par Lyven) ayant une activité de 20 000 PNU/g
- 500 ppm de xylanases (Panlyve XT® commercialisée par Lyven) ayant une activité de 1250 AXC/g
- 0,25% de sel Fourn sel® (NaCl en poudre commercialisé par Salins).

Le lait de farine est préparé par batch de 950 kg de farine et des ingrédients ci-dessus dans un bac d'enzymation, en mélangeant la farine avec de l'eau préchauffée à 55°C. Le lait est préparé en ajoutant la farine froide dans l'eau à 55°C.

A la fin de la phase d'introduction de la farine, 4200 ppm de protéase liquide Prolyve BS 2L, commercialisée par Lyven, à 2000 PNU/g sont ajoutés dans le bac d'enzymation, ainsi que 520 ppm de xylanase liquide Filterlyve AXC 1500L, commercialisée par Lyven, à 1600 AXC/g.

Le tout est ensuite maintenu à 55°C durant 30 min.

Le lait ainsi pré-traité est ensuite transféré dans le cuiseur où l'amylase est ajoutée, pour y être cuit selon un programme à 3 paliers dont les températures et les durées peuvent être modifiées.

Les adjuvants standards utilisés pour les cuissons et l'enduction du papier sont :
- α-amylase : Enzy-myl CP® commercialisée par Adivec,
- Sulfate de zinc : sulfate de zinc à 30% commercialisé par Floridienne Chimie SA,
- Agent de collage : copolymère de styrène-acrylate de butyle commercialisé par BASF,
- PAC 18: Polychlorure d'aluminium à 18% commercialisé par EKA CHIMIE.

### Mesure de la résistance à l'éclatement

La mesure de la résistance à l'éclatement a été réalisée selon la norme ISO 2758.

### Mesure du grammage

Le grammage a été mesuré selon la norme ISO 536. L'indice Mullen est le rapport de la résistance à l'éclatement sur le grammage.

### Short span compression test

Le Short span compression test a été réalisé selon la norme ISO 9895.

### Résultats

8 cuissons ont été réalisées.

Les conditions des essais étaient les suivantes.

| Essai | Farine (kg) | Sel (%) | Cystéine (ppm) | Protéases Prolyve BS conc (ppm) *Prolyve BS 2L (ppm)* | Xylanase Panylve XT (ppm) Filterlyve 1500L (ppm) | Alpha-amylase (ppm) | Sulfate de zinc (kg/t farine) | T° palier 1 (°C) | T° palier 2 (°C) | T° palier 3 (°C) |
|---|---|---|---|---|---|---|---|---|---|---|
| 1 | 950 | 0,25 | 500 | 300 | 500 | 350 | 12 | 50 | 85 | 92 |
| | | | | *4200* | *500* | | | | | |
| 2 | 950 | 0,25 | 500 | 300 | 500 | 350 | 10 | 50 | 85 | 92 |
| | | | | *4200* | *500* | | | | | |
| 3 | 950 | 0,25 | 500 | 300 | 500 | 350 | 10 | 50 | 85 | 92 |
| | | | | *4200* | *500* | | | | | |
| 4 | 950 | 0,25 | 500 | 300 | 500 | 350 | 10 | 70 | 80 | 92 |
| | | | | *4200* | *500* | | | | | |
| 5 | 950 | 0,25 | 500 | 300 | 500 | 350 | 10 | 70 | 75 | 92 |
| | | | | *4200* | *500* | | | | | |
| 6 | 950 | 0,25 | 500 | 300 | 500 | 350 | 10 | 70 | 75 | 92 |
| | | | | *3000* | *500* | | | | | |
| 7 | 950 | 0,25 | 500 | 300 | 500 | 350 | 10 | 70 | 75 | 92 |
| | | | | *2000* | *500* | | | | | |
| 8 | 950 | 0,25 | 500 | 300 | 500 | 350 | 10 | 70 | 75 | 92 |
| | | | | *1000* | *1000* | | | | | |

L'indice Mullen a été déterminé pour chaque essai. Des tests SCT (*"Short span compression test"*) ont également été réalisés pour chaque essai.

Comme le montre la Figure, des bons indices SCT et Mullen ont pu être obtenus. On observe une légère baisse de ces indices au cours du temps, de 3% pour l'indice SCT et de 8% pour l'indice Mullen. Cette baisse est due à une légère augmentation de la viscosité qui diminue la pénétration de la sauce dans le support.

Après une journée de production en continu, on conserve un indice Mullen supérieur à 2,5 kPa*m²/g et un indice SCT supérieur à 1,8 100*kN*m/g.

## Revendications

1. Composition pour l'enduction ou le couchage d'un matériau ligno-cellulosique papier - carton, comprenant de la farine de céréales, 100 à 1000 ppm de cystéine, 50 à 1000 ppm à 20 000 PNU/g d'au moins une protéase, 10 à 1500 ppm à 1250 AXC/g d'au moins une hémicellulase et au moins 0,1% d'un sel qui n'est pas un inhibiteur enzymatique, en poids par rapport au poids de farine.

2. Composition selon la revendication 1, comprenant de 10 à 1000 ppm à 1250 AXC/g d'au moins une hémicellulase.

3. Composition selon la revendication 1 ou 2, comprenant de 10 à 500 ppm à 1250 AXC/g d'au moins une hémicellulase.

4. Composition selon l'une des revendications 1 à 3, dans laquelle ladite au moins une protéase est la bacillolysine et/ou ladite au moins une hémicellulase est une xylanase.

5. Composition selon l'une des revendications 1 à 4, comprenant de la farine de blé, 500 ppm de cystéine, 300 ppm à 20 000 PNU/g de bacillolysine, 70 ppm à 1250 AXC/g de xylanase et 0.25% de chlorure de sodium, en poids par rapport au poids de farine.

6. Procédé de fabrication de sauce comprenant les étapes consistant à :
a) disperser ou solubiliser la composition telle que définie dans l'une quelconque des revendications 1 à 5 dans de l'eau,
b) ajouter de 100 à 1500 mL par tonne de farine d'au moins une amylase à 165 LAU/mL dans la composition dispersée ou solubilisée à l'étape a),
c) porter et maintenir le mélange obtenu à l'étape b) à une température supérieure ou égale à 75°C de manière à obtenir une sauce, et
d) inactiver les amylases présentes dans la sauce obtenue à l'étape c).

7. Procédé de fabrication de sauce selon la revendication 6, dans lequel 500 à 9500 ppm à 2000 PNU/g d'au moins une protéase et/ou 125 à 1125 ppm à 1600 AXC/g d'au moins une hémicellulase, en poids par rapport au poids de farine, sont ajoutés à l'étape a) dans la composition dispersée ou solubilisée.

8. Procédé de fabrication de sauce selon la revendication 6 ou 7, dans lequel l'étape a) est mise en oeuvre dans un bac d'enzymation d'où la composition dispersée ou solubilisée est ensuite transférée vers un cuiseur dans lequel les étapes b), c) et d) sont mises en oeuvre.

9. Procédé de fabrication de sauce comprenant les étapes consistant à :
a) disperser ou solubiliser dans de l'eau une composition comprenant de la farine de céréales, 100 à 1000 ppm de cystéine, 50 à 1000 ppm à 20 000 PNU/g d'au moins une protéase et 10 à 1500 ppm à 1250 AXC/g d'au moins une hémicellulase, en poids par rapport au poids de farine,
b) ajouter, dans la composition dispersée ou solubilisée à l'étape a), au moins 0,1% d'un sel qui n'est pas un inhibiteur enzymatique, en poids par rapport au poids de farine, et de 100 à 1500 mL par tonne de farine d'au moins une amylase à 165 LAU/mL,
c) porter et maintenir le mélange obtenu à l'étape b) à une température supérieure ou égale à 75°C de manière à obtenir une sauce, et
d) inactiver les amylases présentes dans la sauce obtenue à l'étape c).

10. Procédé de fabrication de sauce selon la revendication 9, dans lequel 500 à 9500 ppm à 2000 PNU/g d'au moins une protéase et/ou 125 à 1125 ppm à 1600 AXC/g d'au moins une hémicellulase, en poids par rapport au poids de farine, sont ajoutés à l'étape b) dans la composition dispersée ou solubilisée.

11. Procédé de fabrication de sauce selon la revendication 9 ou 10, dans lequel l'étape a) et l'ajout de sel de l'étape b) sont mis en oeuvre dans un bac d'enzymation d'où la composition dispersée ou solubilisée contenant le sel est ensuite transférée vers un cuiseur dans lequel l'ajout d'amylase de l'étape b), et les étapes c) et d), sont mis en oeuvre.

12. Sauce susceptible d'être obtenue par le procédé selon l'une des revendications 6 à 11.

13. Procédé d'enduction ou de couchage d'un matériau ligno-cellulosique papier - carton comprenant les étapes consistant à :
a) fabriquer une sauce par le procédé de fabrication tel que défini à l'une des revendications 6 à 11,
b) enduire ou coucher un matériau ligno-cellulosique papier - carton avec la sauce obtenue à l'étape a), et
c) éventuellement récupérer, dans un bac de retour, le surplus de sauce après enduction ou couchage du matériau ligno-cellulosique papier - carton à l'étape b).

14. Procédé d'enduction ou de couchage selon la revendication 13, dans lequel au moins 300 ppm à 1250 AXC/g d'au moins une hémicellulase sont ajoutés dans le bac de retour.

15. Procédé de fabrication d'un matériau ligno-cellulosique papier - carton enduit ou couché comprenant une étape d'enduction ou de couchage d'une matrice fibreuse ligno-cellulosique avec une sauce telle que définie dans la revendication 12.

16. Papier - carton enduit ou couché susceptible d'être obtenu par le procédé d'enduction ou de couchage selon l'une quelconque des revendications 13 à 14 ou par le procédé de fabrication de papier - carton selon la revendication 15.

17. Utilisation de la composition selon l'une quelconque des revendications 1 à 5 ou de la sauce selon la revendication 12 pour enduire ou coucher du papier - carton.

## Patentansprüche

1. Zusammensetzung zum Beschichten oder Überziehen eines Lignocellulose-Papier-Karton-Materials, aufweisend Getreidemehl, 100 bis 1000 ppm Cystein, 50 bis 1000 ppm mit 20 000 PNU/g mindestens einer Protease, 10 bis 1500 ppm mit 1250 AXC/g mindestens einer Hemicellulase und mindestens 0,1 % eines Salzes, welches kein Enzyminhibitor ist, in Gewichtsanteilen bezogen auf das Gewicht von Mehl.

2. Zusammensetzung gemäß Anspruch 1, aufweisend 10 bis 1000 ppm mit 1250 AXC/g mindestens einer Hemicellulase.

3. Zusammensetzung gemäß Anspruch 1 oder 2, aufweisend 10 bis 500 ppm mit 1250 AXC/g mindestens einer Hemicellulase.

4. Zusammensetzung gemäß einem der Ansprüche 1 bis 3, wobei die mindestens eine Protease Bacillolysin ist und/oder die mindestens eine Hemicellulase eine Xylanase ist.

5. Zusammensetzung gemäß einem der Ansprüche 1 bis 4, aufweisend Weizenmehl, 500 ppm Cystein, 300 ppm mit 20 000 PNU/g Bacillolysin, 70 ppm mit 1250 AXC/g Xylanase und 0,25 % Natriumchlorid in Gewichtsanteilen bezogen auf das Gewicht von Mehl.

6. Verfahren zum Herstellen einer Masse, aufweisend die folgenden Schritte:
a) Dispergieren oder Solubilisieren der wie in irgendeinem der Ansprüche 1 bis 5 definierten Zusammensetzung in Wasser,
b) Hinzufügen von 100 bis 1500 mL pro Tonne Mehl mindestens einer Amylase mit 165 LAU/ml zu der in Schritt a) dispergierten oder solubilisierten Zusammensetzung,
c) Bringen und Halten der in Schritt b) erhaltenen Mischung auf eine/einer Temperatur von größer oder gleich 75°C, um eine Masse zu erhalten, und
d) Inaktivieren der Amylasen, die sich in der Masse befinden, die in Schritt c) erhalten wurde.

7. Verfahren zum Herstellen einer Masse gemäß Anspruch 6, wobei 500 bis 9500 ppm mit 2000 PNU/g mindestens einer Protease und/oder 125 bis 1125 ppm mit 1600 AXC/g mindestens einer Hemicellulase, in Gewichtsanteilen bezogen auf das Gewicht von Mehl, in Schritt a) zu der dispergierten oder solubilisierten Zusammensetzung hinzugefügt werden.

8. Verfahren zum Herstellen einer Masse gemäß Anspruch 6 oder 7, wobei der Schritt a) in einer Enzymierungsschale durchgeführt wird, aus der die dispergierte oder solubilisierte Zusammensetzung anschließend in Richtung zu einem Kocher transferiert wird, in dem die Schritte b), c) und d) durchgeführt werden.

9. Verfahren zum Herstellen einer Masse, aufweisend die folgenden Schritte:
a)Dispergieren oder Solubilisieren in Wasser einer Zusammensetzung, die aufweist: Getreidemehl, 100 bis 1000 ppm Cystein, 50 bis 1000 ppm mit 20 000 PNU/g mindestens einer Protease und 10 bis 1500 ppm mit 1250 AXC/g mindestens einer Hemicellulase, in Gewichtsanteilen bezogen auf das Gewicht von Mehl,
b) Hinzufügen zu der in Schritt a) dispergierten oder solubilisierten Zusammensetzung von mindestens 0,1 % eines Salzes, welches kein Enzyminhibitor ist, in Gewichtsanteilen bezogen auf das Gewicht von Mehl, und von 100 bis 1500 mL pro Tonne Mehl mindestens einer Amylase mit 165 LAU/mL,
c) Bringen und Halten der in Schritt b) erhaltenen Mischung auf eine/einer Temperatur von größer oder gleich 75°C, um eine Masse zu erhalten, und
d) Inaktivieren der Amylasen, die sich in der Masse befinden, die in Schritt c) erhalten wurde.

10. Verfahren zum Herstellen einer Masse gemäß Anspruch 9, wobei 500 bis 9500 ppm mit 2000 PNU/g mindestens einer Protease und/oder 125 bis 1125 ppm mit 1600 AXC/g mindestens einer Hemicellulase, in Gewichtsanteilen bezogen auf das Gewicht von Mehl, im Schritt b) zu der dispergierten oder solubilisierten Zusammensetzung hinzugefügt werden.

11. Verfahren zum Herstellen einer Masse gemäß Anspruch 9 oder 10, wobei der Schritt a) und das Hinzufügen von Salz des Schrittes b) in einer Enzymierungsschale durchgeführt werden, aus der die dispergierte oder solubilisierte Zusammensetzung, die das Salz enthält, anschließend in Richtung zu einem Kocher transferiert wird, in dem das Hinzufügen von Amylase des Schrittes b) und die Schritte c) und d) durchgeführt werden.

12. Masse, die geeignet ist, mittels des Verfahrens gemäß einem der Ansprüche 6 bis 11 erhalten zu werden.

13. Verfahren zum Beschichten oder Überziehen eines Lignocellulose-Papier-Karton-Materials, aufweisend die folgenden Schritte:
a) Herstellen einer Masse mittels des wie in einem der Ansprüche 6 bis 11 definierten Herstellungsverfahrens,
b) Beschichten oder Überziehen eines Lignocellulose-Papier-Karton-Materials mit der in Schritt a) erhaltenen Masse, und
c) schließlich Wiedergewinnen, in einem Rückführungsbehälter, des Überschusses der Masse nach dem Beschichten und Überziehen des Lignocellulose-Papier-Karton-Materials in Schritt b).

14. Verfahren zum Beschichten oder Überziehen gemäß Anspruch 13, wobei mindestens 300 ppm mit 1250 AXC/g mindestens einer Hemicellulase in den Rückführungsbehälter hinzugefügt werden.

15. Verfahren zum Herstellen eines beschichteten oder überzogenen Lignocellulose-Papier-Karton-Materials, aufweisend einen Schritt des Beschichtens oder des Überziehens einer Lignocellulose-Fasermatrix mit einer wie in Anspruch 12 definierten Masse.

16. Beschichteter oder überzogener Papier-Karton, der geeignet ist, mittels des Verfahrens zum Beschichten oder Überziehen gemäß irgendeinem der Ansprüche 13 bis 14 oder mittels des Verfahrens zum Herstellen von Papier-Karton gemäß Anspruch 15 erhalten zu werden.

17. Verwendung der Zusammensetzung gemäß irgendeinem der Ansprüche 1 bis 5 oder der Masse gemäß Anspruch 12, um Papier-Karton zu beschichten oder zu überziehen.

## Claims

1. A composition for coating or covering a lignocellulosic paper/cardboard material, comprising cereal flour, 100 to 1000 ppm of cysteine, 50 to 1000 ppm at 20,000 PNU/g of at least one protease, 10 to 1500 ppm at 1250 AXC/g of at least one hemicellulase, and at least 0.1%, by weight based on the flour weight, of a salt that is not an enzyme inhibitor.

2. The composition according to claim 1, comprising 10 to 1000 ppm at 1250 AXC/g of at least one hemicellulase.

3. The composition according to claim 1 or 2, comprising 10 to 500 ppm at 1250 AXC/g of at least one hemicellulase.

4. The composition according to one of claims 1-3, in which said at least one protease is bacillolysin and/or said at least one hemicellulase is a xylanase.

5. The composition according to one of claims 1-4, comprising wheat flour, 500 ppm of cysteine, 300 ppm at 20,000 PNU/g of bacillolysin, 70 ppm at 1250 AXC/g of xylanase, and 0.25%, by weight based on the flour weight, of sodium chloride.

6. A process for producing a coating slip, comprising the steps consisting of:
a) dispersing or solubilising the composition as defined in any one of claims 1-5 in water,
b) adding 100 to 1500 mL, per tonne of flour, of at least one amylase at 165 LAU/mL to the composition dispersed or dissolved in step a),
c) bringing the mixture obtained in step b) to a temperature greater than or equal to 75°C and maintaining it at this temperature so as to obtain a coating slip, and
d) inactivating the amylases present in the coating slip obtained in step c).

7. The process for producing a coating slip according to claim 6, in which 500 to 9500 ppm at 2000 PNU/g of at least one protease and/or 125 to 1125 ppm at 1600 AXC/g of at least one hemicellulase, by weight based on the flour weight, are added to the dispersed or solubilised composition in step a).

8. The process for producing a coating slip according to claim 6 or 7, wherein step a) is carried out in an enzymation tank, from which the dispersed or solubilised composition is then transferred to a cooker in which steps b), c), and d) are carried out.

9. The process for producing a coating slip, comprising the steps consisting of:
a) dispersing or solubilising, in water, a composition comprising cereal flour, 100 to 1000 ppm of cysteine, 50 to 1000 ppm at 20,000 PNU/g of at least one protease, and 10 to 1500 ppm at 1250 AXC/g of at least one hemicellulase, by weight based on the flour weight,
b) adding at least 0.1%, by weight based on the flour weight, of a salt that is not an enzyme inhibitor and from 100 to 1500 mL, per tonne of flour, of at least one amylase at 165 LAU/mL to the composition dispersed or dissolved in step a),
c) bringing the mixture obtained in step b) to a temperature greater than or equal to 75°C and maintaining it at this temperature so as to obtain a coating slip, and
d) inactivating the amylases present in the coating slip obtained in step c).

10. The process for producing a coating slip according to claim 9, in which 500 to 9500 ppm at 2000 PNU/g of at least one protease and/or 125 to 1125 ppm at 1600 AXC/g of at least one hemicellulase, by weight based on the flour weight, are added to the dispersed or dissolved composition in step b).

11. The process for producing a coating slip according to claim 9 or 10, in which step a) and the salt addition of step b) are carried out in an enzymation tank, from which the dispersed or solubilised composition containing the salt is then transferred to a cooker, in which the amylase addition of step b), and steps c) and d), are carried out.

12. A coating slip that can be obtained by the process according to one of claims 6-11.

13. A process for coating or covering a lignocellulosic paper/cardboard material, comprising the steps consisting of:
a) producing a coating slip by the production process as defined in one of claims 6-11,
b) coating or covering a lignocellulosic paper/cardboard material with the coating slip obtained in step a), and
c) recovering, in a return tank, any surplus coating slip remaining after the coating or covering of the lignocellulosic paper/cardboard material in step b).

14. The coating or covering process according to claim 13, in which at least 300 ppm at 1250 AXC/g of at least one hemicellulase are added to the return tank.

15. A process for producing a coated or covered lignocellulosic paper/cardboard material, comprising a step of coating or covering a lignocellulosic fibre matrix with a coating slip as defined in claim 12.

16. A coated or covered paper/cardboard material that can be obtained by the coating or covering process according to any one of claims 13-14 or by the process for producing a paper/cardboard material according to claim 15.

17. A use of the composition according to any one of claims 1-5 or of the coating slip according to claim 12 for coating or covering the paper/cardboard material.
